(19) Europäisches Patentamt
European Patent Office
Office européen des brevets

(11) **EP 3 079 268 A1**

(12) **EUROPEAN PATENT APPLICATION**
published in accordance with Art. 153(4) EPC

(43) Date of publication:
**12.10.2016 Bulletin 2016/41**

(21) Application number: **14876300.6**

(22) Date of filing: **13.06.2014**

(51) Int Cl.:
**H04B 7/04** (2006.01)

(86) International application number:
**PCT/CN2014/000582**

(87) International publication number:
**WO 2015/100689 (09.07.2015 Gazette 2015/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.01.2014 CN 201410005772**

(71) Applicant: **ZTE Corporation**
**Shenzhen, Guangdong 518057 (CN)**

(72) Inventors:
• **LI, Bin**
**Shenzhen**
**Guangdong 518057 (CN)**

• **LV, Gangming**
**Shenzhen**
**Guangdong 518057 (CN)**
• **HUANG, Ying**
**Shenzhen**
**Guangdong 518057 (CN)**
• **ZHANG, Guomei**
**Shenzhen**
**Guangdong 518057 (CN)**
• **QIN, Hongfeng**
**Shenzhen**
**Guangdong 518057 (CN)**

(74) Representative: **Schröer, Gernot H.**
**Meissner Bolte Patentanwälte**
**Rechtsanwälte Partnerschaft mbB**
**Bankgasse 3**
**90402 Nürnberg (DE)**

(54) **METHOD AND BASE STATION FOR COORDINATED BEAMFORMING**

(57)    A method and a base station for implementing coordinated beamforming are disclosed. The method includes: a base station acquiring a transmitting beamforming vector in a current time slot according to a receiving beamforming vector estimate value of each interference terminal; shared in a previous time slot; and each base station acquiring a receiving beamforming vector estimate value in the current time slot according to the transmission beamforming vector in the current time slot and an interference vector shared in the previous time slot, and sharing the acquired receiving beamforming vector estimate value and an interference vector in the current time slot. The technical scheme provided by the embodiment of the present invention considers the receiving beamforming vector in an associated coordinated beamforming scheme based on a maximized SLNR criterion, and only two kinds of information, i.e., receiving beamforming vector estimate value and interference vectors are shared between coordinating base stations. The technical scheme provided by the embodiment of the present invention significantly improves system performance, does not need a terminal to feed back receiving vector information, and significantly decreases system overhead; and simultaneously realizes distributed implementation of all coordinating base stations.

A base station acquires a transmitting beamforming vector in a current time slot according to a receiving beamforming vector estimate value of each interference terminal shared in a previous time slot — 200

The base station transmits a signal on which beamforming has been performed to a serving terminal of the base station — 201

The base station acquires a receiving beamforming vector estimate value in the current time slot according to the transmitting beamforming vector in the current time slot and an interference vector shared in the previous time slot — 202

The base station shares the acquired receiving beamforming vector estimate value in the current time slot and an interference vector of the base station to other terminals with all coordinating base stations in a coordinating set — 203

FIG. 2

## Description

### Technical Field

The present invention relates to the coordinated multipoint transmission technology, in particular to a method and a base station for implementing coordinated beamforming.

### Background of the Related Art

The joint processing technology in coordinated multipoint transmission needs data and channel state information to be shared between nodes participating in coordination. As a result, although system performance can be maximally improved, the requirements on throughput and time delay of a backhaul link are very high, and the requirement on symbol synchronization is very strict. At present, the joint processing technology is difficult to implement under the related network architecture and standards.

Coordinated beamforming is an important branch of the coordinated multipoint transmission technology and provides a compromise scheme between the backhaul overhead and system performance. Compared with the joint processing, the coordinated beamforming only needs to share the channel state information between base stations, thus inter-cell interference can be coordinated and suppressed through methods such as transmission and receiving beam optimization, power control and terminal scheduling, and therefore coordinate beamforming can be easily implemented under the existing network architecture. When the number of terminals in a system is large enough, the system performance can be obviously improved through this interference coordination method.

Related coordinated beamforming schemes for Multiple Input Multiple Output(MIMO) systems are mainly divided into an egoistic scheme, an altruistic scheme and an egoistic and altruistic compromise scheme. In the egoistic scheme, a base station transmitter ignores interferences to other terminals and maximizes a utility function thereof. The egoistic scheme can obtain good performance when a Signal-to-Noise Ratio (SNR) is comparatively small and noises are dominant (i.e., noise power is comparatively great). However, the performance will be deteriorated when the SNR is comparatively great and the interference is serious. In the altruistic scheme, the base station transmitter minimizes interferences to other terminals. This scheme can effectively suppress interferences between terminals, especially, when the SNR is comparatively large, i.e., the interferences are dominant, by adopting the altruistic scheme, good performance can be obtained. However, the efficiency of the altruistic scheme is comparatively lower under the situation of small SNR. In the egoistic and altruistic compromise scheme, a compromise is made between maximization of utility function thereof and minimization of interferences to other terminals, such that the system performance is optimal. As proved by literatures, if maximization of system sum rate is used as a criterion, a designed transmitting beamforming vector is a linear combination of the egoistic scheme and the altruistic scheme; and if maximization of a Signal-to-Leakage-and-Noise Ratio (SLNR) as a criterion, from a target function, it can be seen that a compromise needs to be made between the egoistic scheme and the altruistic scheme. The above-mentioned schemes can be further divided into two schemes, i.e., a coordinated beamforming scheme considering a receiving vector and a coordinated beamforming scheme not considering the receiving vector, wherein the performance obtained by adopting the scheme considering the receiving vector is obviously improved relative to the performance obtained by adopting the scheme not considering the receiving vector, but the feedback overhead and information share overhead thereof are much greater that the overhead of the scheme not considering the receiving vector.

The traditional transmitting beamforming vector design scheme based on the SLNR criterion can be implemented at each station in a distributed manner. However, since this design method does not consider the influence of the receiving vector on the performance, the system performance is decreased. However, if the receiving vector of each base station is considered, all coordinating base stations are required to share all channel state information, this increases the overhead of an X2 interface, and anyhow, it is difficult to implement.

### Summary of the Invention

The technical problem to be solved by the embodiment of the present invention is to provide a method and a base station for implementing coordinated beamforming, such that system performance is improved and interface overhead is not increased by considering an influence of a receiving beamforming vector on performance.

In order to solve the technical problem, the following technical scheme is adopted.

A method for implementing coordinated beamforming, comprises:

acquiring, by a base station, a transmitting beamforming vector in a current time slot according to a receiving beamforming vector estimate value of each interference terminal, shared by each base station in a coordinating set in a previous time slot;

acquiring, by the base station, a receiving beamforming vector estimate value in the current time slot according to the transmitting beamforming vector in the current time slot and an interference vector shared in the previous time slot; and

sharing, by the base station, the acquired receiving beamforming vector estimate value in the current time slot and an interference vector thereof to other terminals with all coordinating base stations in the coordinating set.

Alternatively, the method further comprises: performing, by each base station in the coordinating set, initialization:

initializing, by each base station in the coordinating set, the transmitting beamforming vector according to a maximized Signal-to-Leakage-and-Noise Ratio(SLNR) scheme; and

respectively calculating, by each base station in the coordinating set, a receiving beamforming vector initiation estimate value and an interference initiation vector of each base station to other interference terminals except a serving terminal in the coordinating set.

Alternatively, the step of initializing, by each base station in the coordinating set, the transmitting beamforming vector according to the maximized SLNR scheme comprises:

the transmission transmitting beamforming vector $\mathbf{w}_i^{(n-1)}$ which is an eigenvector corresponding to a maximum

generalized eigenvalue of $\beta_{ii}\mathbf{H}_{ii}^H\mathbf{H}_{ii}$ and $\dfrac{\sigma^2}{P_i}\mathbf{I}_{N_t} + \sum\limits_{j=1, j\neq i}^{m} \beta_{ji}\mathbf{H}_{ji}^H\mathbf{H}_{ji}$ according to a related SLNR scheme, and

$$\mathbf{w}_i^{(n-1)} = \max_{\left\|\mathbf{w}_i^{(n-1)}=1\right\|} \text{gen.eigenvector}\left(\beta_{ii}\mathbf{H}_{ii}^H\mathbf{H}_{ii}, \frac{\sigma^2}{P_i}\mathbf{I}_{N_t} + \sum\limits_{j=1, j\neq i}^{m} \beta_{ji}\mathbf{H}_{ji}^H\mathbf{H}_{ji}\right),$$ wherein m denotes that there are m base stations in the coordinating set, each base station serves one terminal, an ith terminal is a serving terminal of an ith base station, $\mathbf{H}_{ji}^{(n)}$ denotes a channel matrix ($N_r$x$N_t$ dimensions) from a base station $i$ to a terminal $j$ in an nth time slot, $\mathbf{H}_{ji}^{(n)}$ can be expressed by omitting superscript (n) when channels are in a static state, i.e., the channel matrix in each time slot is expressed as $\mathbf{H}_{ji}$, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes a transmitting beamforming vector of the base station $i$ in the nth time slot, superscript $H$ denotes conjugate transpose, transmitting power of the base station $i$ is $P_i$ and noise power is $\sigma^2$;

the step of respectively calculating, by each base station in the coordinating set, the initial receiving beamforming vector estimate value comprises:

respectively calculating, by each base station, the initial receiving beamforming vector estimate value

$$\hat{\mathbf{v}}_i^{(n-1)} = \dfrac{\mathbf{H}_{ii}\mathbf{w}_i^{(n-1)}}{\left\|\mathbf{H}_{ii}\mathbf{w}_i^{(n-1)}\right\|},$$ wherein $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot; and

the step of respectively calculating, by each base station in the coordinating set, the interference initiation vector of each base station to other interference terminals in the coordinating set except the serving terminal comprises:

respectively calculating, by each base station, the interference vector initiation value $\sqrt{P_i\beta_{ji}}\mathbf{H}_{ji}\mathbf{w}_i^{(n-1)}$ of

each base station to other interference terminals except the serving terminal in the coordinating set.

Alternatively, the step of initializing, by each base station in the coordinating set, the transmitting beamforming vector according to the maximized SLNR scheme comprises: initializing, by each base station, the transmitting beam-

forming vector $\mathbf{w}_i^{(n-1)}$ which is an eigenvector corresponding to a maximum generalized eigenvalue of $\beta_{ii}\mathbf{H}_{ii}^{(n-1)H}\mathbf{H}_{ii}^{(n-1)}$

and $\dfrac{\sigma^2}{P_i}\mathbf{I}_{N_t} + \sum\limits_{j=1, j\neq i}^{m}\beta_{ji}\mathbf{H}_{ji}^{(n-1)H}\mathbf{H}_{ji}^{(n-1)}$ according to a related SLNR scheme, and

$$\mathbf{w}_i^{(n-1)} = \max_{\left\|\mathbf{w}_i^{(n-1)}\right\|=1}\text{gen.eigenvector}\left(\beta_{ii}\mathbf{H}_{ii}^{(n-1)H}\mathbf{H}_{ii}^{(n-1)}, \frac{\sigma^2}{P_i}\mathbf{I}_{N_t} + \sum\limits_{j=1, j\neq i}^{m}\beta_{ji}\mathbf{H}_{ji}^{(n-1)H}\mathbf{H}_{ji}^{(n-1)}\right),$$ wherein m denotes that there are m base stations in the coordinating set, each base station serves one terminal, an $i$th terminal is a serving terminal of an

$i$th base station, $\mathbf{H}_{ji}^{(n)}$ denotes a channel matrix ($N_r$x$N_t$ dimensions) from a base station $i$ to a terminal $j$ in an $n$th time

slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes a transmitting beamforming vector of the base station $i$ in the $n$th time slot, superscript $H$ denotes conjugate transpose, transmitting power of the base station $i$ is $P_i$ and noise power is $\sigma^2$;

the step of respectively calculating, by each base station in the coordinating set, the initial receiving beamforming vector estimate value comprises: respectively calculating, by each base station, the receiving beamforming vector initiation

estimate value $\hat{\mathbf{v}}_i^{(n-1)} = \dfrac{\mathbf{H}_{ii}^{(n-1)}\mathbf{w}_i^{(n-1)}}{\left\|\mathbf{H}_{ii}^{(n-1)}\mathbf{w}_i^{(n-1)}\right\|}$, wherein $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot; and

the step of respectively calculating, by each base station in the coordinating set, the interference initiation vector of each base station to other interference terminals except the serving terminal in the coordinating set comprises that:

the interference vector initiation value of each base station to other interference terminals except the serving terminal in the coordinating set is: $\sqrt{P_i\beta_{ji}}\mathbf{H}_{ji}^{(n-1)}\mathbf{w}_i^{(n-1)}$ .

Alternatively, the step of acquiring the transmitting beamforming vector in the current time slot comprises:

calculating, by the base station, the transmitting beamforming vector of the current base station in the current time slot based on a maximized SLNR criterion according to the receiving beamforming vector estimate value, shared in the previous time slot, of each interference terminal.

Alternatively, the step of calculating, by the base station, the transmitting beamforming vector of the current base station in the current time slot based on the maximized SLNR criterion according to the receiving beamforming vector estimate value, shared in the previous time slot, of each interference terminal comprises:

calculating the transmitting beamforming vector of the current base station in the current time slot according to the

following formula: $\mathbf{w}_i^{(n)} = \dfrac{\left(\mathbf{\Phi}_i^{(n-1)}\right)^{-1}\mathbf{H}_{ii}^{H}\hat{\mathbf{v}}_i^{(n-1)}}{\left\|\left(\mathbf{\Phi}_i^{(n-1)}\right)^{-1}\mathbf{H}_{ii}^{H}\hat{\mathbf{v}}_i^{(n-1)}\right\|}$, wherein $\mathbf{\Phi}_i^{(n-1)} = \sum\limits_{j=1, j\neq i}^{m}P_i\beta_{ji}\mathbf{H}_{ji}^{(n-1)H}\hat{\mathbf{v}}_j^{(n-1)}\hat{\mathbf{v}}_j^{(n-1)H}\mathbf{H}_{ji}^{(n-1)} + \sigma^2\mathbf{I}_{N_t}$,

and wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a

base station $i$ to a terminal $j$ in an $n$th time slot, $\beta_{ji}$ denotes a path loss from the base station $i$ to the terminal $j$, $\mathbf{w}_i^{(n)}$

($N_t$x1 dimensions, $\left\|\mathbf{w}_i^{(n)}\right\|=1$) denotes a transmitting beamforming vector of the base station $i$ in the nth time slot, $\mathbf{v}_i^{(n)}$

($N_r$x1 dimensions, $\left\|\mathbf{v}_i^{(n)}\right\|=1$ ) ) denotes a receiving beamforming vector of the terminal $i$ in the $n$th time slot, superscript $H$ denotes conjugate transpose, transmitting power of the base station $i$ is $P_i$, noise power is $\sigma^2$ and $\mathbf{I}_{N_t}$ denotes an $N_t$x$N_t$-dimension unit matrix.

Alternatively, the step of acquiring the receiving beamforming vector estimate value in the current time slot comprises:

calculating, by the base station, the receiving beamforming vector estimate value of a serving terminal in the current time slot based on a Minimum Mean Squared Error (MMSE) criterion according to the transmitting beamforming vector in the current time and the interference vector shared in the previous time slot.

Alternatively, the step of calculating, by the base station, the receiving beamforming vector estimate value of the serving terminal in the current time slot based on the MMSE criterion according to the transmitting beamforming vector in the current time and the interference vector shared in the previous time slot comprises:

calculating the receiving beamforming vector estimate value of the serving terminal in the current time slot according to the following formula:

$$\hat{\mathbf{v}}_i^{(n)} = \frac{\left(\mathbf{\Psi}_i^{(n-1)}\right)^{-1}\mathbf{H}_{ii}\mathbf{w}_i^{(n)}}{\left\|\left(\mathbf{\Psi}_i^{(n-1)}\right)^{-1}\mathbf{H}_{ii}\mathbf{w}_i^{(n)}\right\|}$$ , wherein $$\mathbf{\Psi}_i^{(n-1)} = \sum_{j=1,j\neq i}^{m} P_j\beta_{ij}\mathbf{H}_{ij}^{(n-1)}\mathbf{w}_j^{(n-1)}\mathbf{w}_j^{(n-1)H}\mathbf{H}_{ij}^{(n-1)H} + \sigma^2\mathbf{I}_{N_r}$$ , wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes the transmitting beamforming vector of the base station $i$ in the $n$th time slot, $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot, superscript $H$ denotes conjugate transpose, transmitting power of the base station $i$ is $P_i$, noise power is $\sigma^2$ and $\mathbf{I}_{N_r}$ denotes an $N_r$x$N_r$-dimension unit matrix;

and the interference vector $\sqrt{P_i\beta_{ji}}\mathbf{H}_{ji}\mathbf{w}_i^{(n)}$.

Alternatively, the method further comprises:

calculating, by each terminal, the receiving beamforming vector based on the MMSE criterion, that is:

$$\mathbf{v}_i^{(n)} = \frac{\left(\mathbf{\Psi}_i^{(n)}\right)^{-1}\mathbf{H}_{ii}\mathbf{w}_i^{(n)}}{\left\|\left(\mathbf{\Psi}_i^{(n)}\right)^{-1}\mathbf{H}_{ii}\mathbf{w}_i^{(n)}\right\|}$$ , wherein $$\mathbf{\Psi}_i^{(n)} = \sum_{j=1,j\neq i}^{m} P_j\beta_{ij}\mathbf{H}_{ij}^{(n)}\mathbf{w}_j^{(n)}\mathbf{w}_j^{(n)H}\mathbf{H}_{ij}^{(n)H} + \sigma^2\mathbf{I}_{N_r}$$ , wherein m denotes that there are m base stations in the coordinating set, each base station serves one terminal, an ith terminal is a serving terminal of an $i$th base station, $\mathbf{H}_{ji}^{(n)}$ denotes a channel matrix ($N_r$x$N_t$ dimensions) from a base station i to a terminal j in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes the transmitting beamforming vector of the base station i in the nth time slot, $\mathbf{v}_i^{(n)}$ ($N_r$x1 dimensions, $\left\|\mathbf{v}_i^{(n)}\right\|=1$) denotes the receiving beamforming vector of the terminal i in the nth time slot, superscript $H$ denotes conjugate transpose, transmitting power of the base station $i$ is $P_i$, noise power is $\sigma^2$ and $\mathbf{I}_{N_r}$ denotes

an $N_r$x$N_r$-dimension unit matrix;

receiving, by each terminal, a signal transmitted by a serving base station to which the terminal belongs by using the calculated receiving beamforming vector;

increasing $n$ by one, that is., $n \leftarrow n+1$; and repeating processing at a transmitting end and a receiving end until communication is completed.

Alternatively, the step of sharing, by the base station, the acquired receiving beamforming vector estimate value in the current time slot and the interference vector thereof to other terminals with all coordinating base stations in the coordinating set comprises:

transmitting, by the base station, the acquired receiving beamforming vector estimate value in the current time slot and the interference vector thereof to other terminals to other coordinating base stations in the coordinating set.

A base station comprises a first acquisition module, a transmitting module, a second acquisition module and a coordinating module, wherein,

the first acquisition module is configured to acquire a transmitting beamforming vector in a current time slot according to a receiving beamforming vector estimate value of each interference terminal, shared by each base station in a coordinating set in a previous time slot,;

the transmission module is configured to perform beamforming on a signal by using the transmitting beamforming vector;

the second acquisition module is configured to acquire a receiving beamforming vector estimate value in the current time slot according to the transmitting beamforming vector in the current time slot and an interference vector shared in the previous time slot; and

the coordinating module is configured to store the acquired receiving beamforming vector estimate value in the current time slot and an interference vector of the base station to other coordinating terminals in the current time slot in a storage module, and share the acquired receiving beamforming vector estimate value and the interference vector with all coordinating base stations in the coordinating set.

Alternatively, the base station further comprises an initialization module, wherein:

the initialization module is configured to initialize the transmitting beamforming vector according to a Signal-to-Leakage-and-Noise Ratio (SLNR) scheme; calculate a receiving beamforming vector initiation estimate value and an interference initiation vector thereof to other interference terminals except a serving terminal in the coordinating set; and store the calculated receiving beamforming vector initiation estimate value and interference initiation vector in the storage module.

Alternatively, the initialization module performs initialization according to the SLNR scheme in the following way:

each base station initializing the transmitting beamforming vector $\mathbf{w}_i^{(n-1)}$ which is an eigenvector corresponding to a maximum generalized eigenvalue of $\beta_{ii} \mathbf{H}_{ii}^H \mathbf{H}_{ii}$ and $\dfrac{\sigma^2}{P_i} \mathbf{I}_{N_t} + \displaystyle\sum_{j=1, j \neq i}^{m} \beta_{ji} \mathbf{H}_{ji}^H \mathbf{H}_{ji}$ according to a related SLNR

scheme, and

$$\mathbf{w}_i^{(n-1)} = \max_{\left\| \mathbf{w}_i^{(n-1)} \right\| = 1} \mathrm{gen.eigenvector}\left( \beta_{ii} \mathbf{H}_{ii}^H \mathbf{H}_{ii}, \frac{\sigma^2}{P_i} \mathbf{I}_{N_t} + \sum_{j=1, j \neq i}^{m} \beta_{ji} \mathbf{H}_{ji}^H \mathbf{H}_{ji} \right),$$

wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from

a base station $i$ to a terminal $j$ in an nth time slot, $\mathbf{H}_{ji}^{(n)}$ can be expressed by omitting superscript (n) when channels are in a static state, i.e., the channel matrix in each time slot is expressed as $\mathbf{H}_{ji}$, $\beta_{ji}$ denotes a path loss from the base station $i$ to the terminal $j$, $\mathbf{w}_i^{(n)}$ ($N_t$x1 dimensions, $\left\| \mathbf{w}_i^{(n)} \right\| = 1$) denotes a transmitting beamforming vector of the base station $i$ in the $n$th time slot, superscript $H$ denotes conjugate transpose, transmitting power of the base station $i$ is $P_i$ and noise power is $\sigma^2$;

the step of each base station in the coordinating set respectively calculating the receiving beamforming vector estimate value comprises:

each base station respectively calculating the receiving beamforming vector initiation estimate value

$$\hat{\mathbf{v}}_i^{(n-1)} = \frac{\mathbf{H}_{ii}\mathbf{w}_i^{(n-1)}}{\left\|\mathbf{H}_{ii}\mathbf{w}_i^{(n-1)}\right\|},$$ wherein $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot; and

the step of each base station in the coordinating set respectively calculating the interference initiation vector of each base station to other interference terminals except the serving terminal in the coordinating set comprises that:

the interference vector initiation value of each base station to other interference terminals except the serving terminal in the coordinating set is $\sqrt{P_i\beta_{ji}}\,\mathbf{H}_{ji}\mathbf{w}_i^{(n-1)}$ .

Alternatively, the initialization module further performs initialization according the SLNR scheme in the following way:

the step of each base station in the coordinating set initializing the transmitting beamforming vector according to a maximized SLNR scheme comprises t: each station initializing the transmitting beamforming vector $\mathbf{w}_i^{(n-1)}$ which

is an eigenvector corresponding to a maximum generalized eigenvalue of $\beta_{ii}\mathbf{H}_{ii}^{(n-1)H}\mathbf{H}_{ii}^{(n-1)}$ and

$$\frac{\sigma^2}{P_i}\mathbf{I}_{N_t} + \sum_{j=1,j\neq i}^{m} \beta_{ji}\mathbf{H}_{ji}^{(n-1)H}\mathbf{H}_{ji}^{(n-1)}$$ according to a related SLNR scheme, that is,

$$\mathbf{w}_i^{(n-1)} = \max_{\left\|\mathbf{w}_i^{(n-1)}\right\|=1} \text{gen.eigenvector}\left(\beta_{ii}\mathbf{H}_{ii}^{(n-1)H}\mathbf{H}_{ii}^{(n-1)}, \frac{\sigma^2}{P_i}\mathbf{I}_{N_t} + \sum_{j=1,j\neq i}^{m} \beta_{ji}\mathbf{H}_{ji}^{(n-1)H}\mathbf{H}_{ji}^{(n-1)}\right),$$ wherein m denotes that there are m base stations in the coordinating set, each base station serves one terminal, an ith terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$)

denotes a transmitting beamforming vector of the base station $i$ in the nth time slot, superscript $H$ denotes conjugate transpose, transmitting power of the base station i is $P_i$ and noise power is $\sigma^2$;
the step of each base station in the coordinating set respectively calculating, the receiving beamforming vector initiation estimate value comprises: each station respectively calculating the receiving beamforming vector initiation

estimate value $\hat{\mathbf{v}}_i^{(n-1)} = \frac{\mathbf{H}_{ii}^{(n-1)}\mathbf{w}_i^{(n-1)}}{\left\|\mathbf{H}_{ii}^{(n-1)}\mathbf{w}_i^{(n-1)}\right\|}$ , wherein $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot; and
the step of each base station in the coordinating set respectively calculating the interference initiation vector of each base station to other interference terminals except the serving terminal in the coordinating set comprises that :

the interference vector initiation value of each base station to other interference terminals except the serving terminal in the coordinating set is $\sqrt{P_i\beta_{ji}}\,\mathbf{H}_{ji}^{(n-1)}\mathbf{w}_i^{(n-1)}$ .

Alternatively, the first acquisition module acquires the transmitting beamforming vector in the current time slot according to the receiving beamforming vector estimate value of each interference terminal, shared by each base station in the coordinating set in the previous time slot, in the following way:

calculating the transmitting beamforming vector of the current base station in the current time slot according to the following formula: $\mathbf{w}_i^{(n)} = \dfrac{\left(\mathbf{\Phi}_i^{(n-1)}\right)^{-1} \mathbf{H}_{ii}^H \hat{\mathbf{v}}_i^{(n-1)}}{\left\|\left(\mathbf{\Phi}_i^{(n-1)}\right)^{-1} \mathbf{H}_{ii}^H \hat{\mathbf{v}}_i^{(n-1)}\right\|}$ , wherein $\mathbf{\Phi}_i^{(n-1)} = \displaystyle\sum_{j=1, j\neq i}^{m} P_i \beta_{ji} \mathbf{H}_{ji}^{(n-1)H} \hat{\mathbf{v}}_j^{(n-1)} \hat{\mathbf{v}}_j^{(n-1)H} \mathbf{H}_{ji}^{(n-1)} + \sigma^2 \mathbf{I}_{N_t}$ ,

wherein m denotes that there are m base stations in the coordinating set, each base station serves one terminal, an ith terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes a transmitting beamforming vector of the base station $i$ in the nth time slot, $\mathbf{v}_i^{(n)}$ ($N_r$x1 dimensions, $\left\|\mathbf{v}_i^{(n)}\right\|=1$) denotes a receiving beamforming vector of the terminal $i$ in the nth time slot, superscript $H$ denotes conjugate transpose, transmitting power of the base station i is $P_i$, noise power is $\sigma^2$ and $\mathbf{I}_{N_t}$ denotes an $N_t$x$N_t$-dimension unit matrix.

Alternatively, the second acquisition module acquires the receiving beamforming vector estimate value in the current time slot according to the transmitting beamforming vector in the current time slot and the interference vector in the previous time slot in the following way:

calculating the receiving beamforming vector estimate value of the serving terminal in the current time slot according to the following formula:

$$\hat{\mathbf{v}}_i^{(n)} = \dfrac{\left(\mathbf{\Psi}_i^{(n-1)}\right)^{-1} \mathbf{H}_{ii} \mathbf{w}_i^{(n)}}{\left\|\left(\mathbf{\Psi}_i^{(n-1)}\right)^{-1} \mathbf{H}_{ii} \mathbf{w}_i^{(n)}\right\|} \quad , \quad \text{wherein} \quad \mathbf{\Psi}_i^{(n-1)} = \sum_{j=1, j\neq i}^{m} P_j \beta_{ij} \mathbf{H}_{ij}^{(n-1)} \mathbf{w}_j^{(n-1)} \mathbf{w}_j^{(n-1)H} \mathbf{H}_{ij}^{(n-1)H} + \sigma^2 \mathbf{I}_{N_r} \quad , \quad \text{wherein}$$

m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes the transmitting beamforming vector of the base station $i$ in the nth time slot, $\mathbf{v}_i^{(n)}$ ($N_r$x1 dimensions, $\left\|\mathbf{v}_i^{(n)}\right\|=1$) denotes the receiving beamforming vector of the terminal $i$ in the nth time slot, superscript $H$ denotes conjugate transpose, transmitting power of the base station i is $P_i$, noise power is $\sigma^2$ and $\mathbf{I}_{N_r}$ denotes an $N_r$x$N_r$-dimension unit matrix;

and the interference vector $\sqrt{P_i \beta_{ji}} \mathbf{H}_{ji} \mathbf{w}_i^{(n)}$ .

Alternatively, processing at a receiving end comprises:

each terminal calculating the receiving beamforming vector based on a Minimum Mean Squared Error (MMSE) criterion, that is, $\mathbf{v}_i^{(n)} = \dfrac{\left(\mathbf{\Psi}_i^{(n)}\right)^{-1} \mathbf{H}_{ii} \mathbf{w}_i^{(n)}}{\left\|\left(\mathbf{\Psi}_i^{(n)}\right)^{-1} \mathbf{H}_{ii} \mathbf{w}_i^{(n)}\right\|}$ , wherein $\mathbf{\Psi}_i^{(n)} = \displaystyle\sum_{j=1, j\neq i}^{m} P_j \beta_{ij} \mathbf{H}_{ij}^{(n)} \mathbf{w}_j^{(n)} \mathbf{w}_j^{(n)H} \mathbf{H}_{ij}^{(n)H} + \sigma^2 \mathbf{I}_{N_r}$ ,

wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from

a base station $i$ to a terminal $j$ in an $n$th time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes the transmitting beamforming vector of the base station $i$ in the $n$th time slot, $\mathbf{v}_i^{(n)}$ ($N_r$x1 dimensions, $\left\|\mathbf{v}_i^{(n)}\right\|=1$) denotes the receiving beamforming vector of the terminal $i$ in the nth time slot, superscript $H$ denotes conjugate transpose, transmitting power of the base station $i$ is $P_i$, noise power is $\sigma^2$ and $\mathbf{I}_{N_r}$ denotes an $N_r$x$N_r$-dimension unit matrix;

each terminal receiving a signal transmitted by a serving base station to which the terminal belongs by using the calculated receiving beamforming vector;

increasing n by one, that is, $n \leftarrow n+1$; and repeating processing at a transmitting end and a receiving end until communication is completed.

Alternatively, the base station is in a coordinating set, and the base station and other base stations in the coordinating set are mutually coordinating base stations; and

in the coordinating set, each base station serves one terminal and serves the terminal by adopting a coordinated beamforming mode.

Compared with the related art, the technical scheme of the present application comprises: a base station acquiring a transmitting beamforming vector in a current time slot according to a receiving beamforming vector estimate value of each interference terminal shared in a previous time slot,; the base station acquiring, a receiving beamforming vector estimate value in the current time slot according to the transmitting beamforming vector in the current time slot and an interference vector shared in the previous time slot; and the base station sharing the acquired receiving beamforming vector estimate value in the current time slot and an interference vector thereof to other terminals with all coordinating base stations in the coordinating set. The technical scheme provided by the embodiment of the present invention considers the receiving beamforming vector in an associated coordinated beamforming scheme based on a maximized SLNR criterion, and only two kinds of information, i.e., receiving beamforming vector estimate value and interference vectors are shared between coordinating base stations. Compared with the coordinated beamforming scheme based on the maximized SLNR criterion, system performance is significantly improved, the terminal does not need to feed back the receiving vector information, and system overhead is significantly decreased; and simultaneously distributed implementation of all coordinating base stations is realized.

Other features and advantages of the embodiment of the present invention will be described in subsequent description, and partially become obvious from the description or can be understood by implementing the present invention. The purposes and other advantages of the present invention can be realized and achieved through structures specifically pointed out in the description, claims and drawings.

**Brief Description of Drawings**

The drawings described here are used for providing further understanding about the present invention and constitute a part of the present application. The exemplary embodiments of the present invention and the description thereof are used for explaining the present invention instead of forming any improper limitations to the present invention.

FIG. 1 is a schematic diagram of components of a downlink coordinated multipoint transmission system according to the embodiment of the present invention;

FIG. 2 is a flowchart of a method for implementing coordinated beamforming according to the embodiment of the present invention;

FIG. 3 is a schematic diagram of comparison between terminal average spectrum efficiency oscillograms of embodiment 1 for coordinated beamforming provided by the embodiment of the present invention and related methods for coordinated beamforming;

FIG. 4 is a schematic diagram of comparison between terminal average spectrum efficiency oscillograms of embodiment 2 for coordinated beamforming provided by the embodiment of the present invention and related methods for coordinated beamforming;

FIG. 5 is a schematic diagram of comparison between terminal average spectrum efficiency oscillograms of embodiment 3 for coordinated beamforming provided by the embodiment of the present invention and related methods for coordinated beamforming;

FIG. 6 is a schematic diagram of a component structure of a base station according to the embodiment of the present invention.

**Preferred Embodiments of the Invention**

The embodiments of the present invention will be described below in detail in combination with the drawings. It needs to be stated that the embodiments in the present application and the features in the embodiments can be randomly combined under the situation of no conflict.

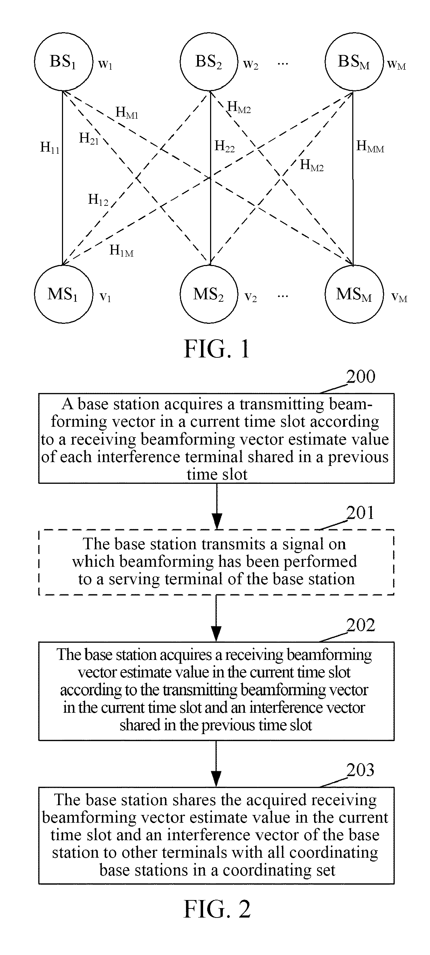

FIG. 1 is a schematic diagram of components of a downlink coordinated multipoint transmission system according to the embodiment of the present invention. The inventive method will be described below in combination with FIG. 1. As shown in FIG. 1, it is assumed that the downlink coordinated multipoint transmission system (also called as a coordinating set) includes seven coordinating base stations, and M denotes that there are M base stations the coordinating set, i.e., M=7. Each base station serves one terminal, and an $i$th terminal is a serving terminal of an $i$th base station, $i$=1, 2,...,7. The base stations serve the terminals by adopting a coordinated beamforming mode.

In FIG. 1, it is assumed that each Base Station (BS) is provided with $N_t$=4 antennas, and each Mobile Station (MS) is provided with $N_r$=2 antennas. So, $\mathbf{H}_{ji}^{(n)}$ denotes a channel matrix ($N_r \times N_t$ dimensions) from a base station $i$ to a terminal $j$ in an $n$th time slot, and a channel mode adopts Rayleigh fading channels. It needs to be stated that, if it is assumed that the channels are statically changed, $\mathbf{H}_{ji}^{(n)}$ can be expressed by omitting superscript (n), i.e., the channel matrix in each time slot is expressed as $\mathbf{H}_{ji}$. $\beta_{ji}$ denotes a path loss from the base station $i$ to the terminal $j$, it is assumed that the path loss from each base station to the serving terminal thereof is $\beta_{ii}$=1, $i$=1,2,$\cdots$,7, and the path loss from each base station to interference terminals (including all terminals except the serving terminal) is a random number within 0-1, i.e., $\beta_{ji}$=$rand$ (1),$i \neq j$. So, a receiving signal $y_i^{(n)}$ of the terminal $i$ in the $n$th time slot can be expressed as formula (1):

$$y_i^{(n)} = P_i \beta_{ii} \mathbf{v}_i^{(n)H} \mathbf{H}_{ii}^{(n)} \mathbf{w}_i^{(n)} x_i^{(n)} + \sum_{j=1,j\neq i}^{7} P_j \beta_{ij} \mathbf{v}_i^{(n)H} \mathbf{H}_{ij}^{(n)} \mathbf{w}_j^{(n)} x_j^{(n)} + \mathbf{v}_i^{(n)H} \mathbf{n}_i \qquad (1)$$

In formula (1), $x_i^{(n)}$ denotes a transmitting signal of the base station $i$ in the $n$th time slot, $\mathbf{w}_i^{(n)}$ ($N_t \times 1$ dimensions, $\left\|\mathbf{w}_i^{(n)}\right\|$=1 ) denotes a transmitting beamforming vector of the base station $i$ in the $n$th time slot, $\mathbf{v}_i^{(n)}$ ($N_r \times 1$ dimensions, $\left\|\mathbf{v}_i^{(n)}\right\|$=1 ) denotes a receiving beamforming vector of the terminal $i$ in the $n$th time slot and superscript $H$ denotes conjugate transpose. Transmitting power of the base station $i$ is $P_i$, receiving noise of the terminal $i$ is $\mathbf{n}_i$ and noise power is $\sigma^2$. According to formula (1), a receiving Signal-to-Interference-and-Noise Ratio (SINR), as shown by formula (2), of the terminal $i$ in the $n$th time slot can be obtained:

$$\mathrm{SINR}_i^{(n)} = \frac{P_i \beta_{ii} \left| \mathbf{v}_i^{(n)H} \mathbf{H}_{ii}^{(n)} \mathbf{w}_i^{(n)} \right|^2}{\sigma^2 + \sum_{j=1,j\neq i}^{7} P_j \beta_{ij} \left| \mathbf{v}_i^{(n)H} \mathbf{H}_{ij}^{(n)} \mathbf{w}_j^{(n)} \right|^2} \qquad (2)$$

It is assumed that the system works in a Time Division Duplexing (TDD) mode. Therefore, a transmitter can acquire a channel matrix thereof to all terminals in the coordinating set by using uplink and downlink reciprocity of channels, i.e., the base station $i$ has already known $\mathbf{H}_{ji}$($j$=1,2,$\cdots$,7). After considering the receiving beamforming vector, an SLNR of the base station $i$ in the nth time slot is as shown by formula (3):

$$\mathrm{SLNR}_i^{(n)} = \frac{P_i \beta_{ii} \left| \mathbf{v}_i^{(n)H} \mathbf{H}_{ii}^{(n)} \mathbf{w}_i^{(n)} \right|^2}{\sigma^2 + \sum_{j=1,j\neq i}^{7} P_i \beta_{ji} \left| \mathbf{v}_j^{(n)H} \mathbf{H}_{ji}^{(n)} \mathbf{w}_i^{(n)} \right|^2} \qquad (3)$$

FIG. 2 is a flowchart of a method for implementing coordinated beamforming according to the embodiment of the present invention. As shown in FIG. 2, the method comprises the following steps.

In step 200: a base station acquires a transmitting beamforming vector in a current time slot according to a receiving beamforming vector estimate value of each interference terminal shared in a previous time slot.

In this step, the base station calculates the transmitting beamforming vector of the current base station in the current time slot based on a maximized SLNR criterion according to the receiving beamforming vector estimate value of each interference terminal shared in the previous time slot.

The receiving beamforming vector estimate value used for acquiring the transmitting beamforming vector in this step is an estimate value of a receiving beamforming vector, acquired by the base station in the previous time slot, of the terminal. It needs to be stated that, through feeding back the receiving beamforming vector in the previous time slot, by the terminal, the effect of the embodiment of the present invention can also be achieved, but the feedback overhead of an uplink link will be slightly increased.

The embodiment of the present invention can further comprise step 201, in which the base station transmits a signal after beamforming to a serving terminal thereof. Specific implementation is a common technical means adopted by one skilled in the art and thus is not repetitively described here.

In step 202: the base station acquires a receiving beamforming vector estimate value in the current time slot according to the transmitting beamforming vector in the current time slot and an interference vector shared in the previous time slot.

In this step, the base station calculates the receiving beamforming vector estimate value of the serving terminal in the current time slot based on a Minimum Mean Squared Error (MMSE) criterion according to the transmitting beamforming vector in the current time and the interference vector shared in the previous time slot.

It needs to be stated that, after step 200, there is no strict sequence for execution of step 201 and step 202.

In step 203: the base station shares the acquired receiving beamforming vector estimate value in the current time slot and an interference vector thereof to other terminals with all coordinating base stations in a coordinating set.

In this step, sharing refers to transmitting the acquired receiving beamforming vector estimate value in the current time slot and the interference vector thereof to other terminals to other coordinating base stations in the coordinating set to which the base station belongs.

From the technical scheme provided by the embodiment of the present invention, it can be seen that, by considering the receiving vector in the related coordinated beamforming scheme based on the maximized SLNR criterion, the estimate value of the receiving beamforming vector of the interference terminal is acquired, and then the transmitting beamforming vector is calculated based on the maximized SLNR criterion. In addition, only two kinds of information, i.e., receiving beamforming vector estimate value and interference vectors are shared between coordinating base stations. Compared with the coordinated beamforming scheme based on the maximized SLNR criterion, the method provided by the embodiment of the present invention significantly improves system performance, does not need a terminal to feed back receiving vector information, and significantly decreases system overhead; and simultaneously realizes distributed implementation of all coordinating base stations.

Before executing the above-mentioned steps (i.e., steps 200-203), the method further comprises that, each base station in the coordinating set to which the base station belongs performs initialization, and specifically comprises that: each base station initializes the transmitting beamforming vector according to a related SLNR scheme; and respectively calculating, by each base station, a receiving beamforming vector initiation estimate value and an interference initiation vector of each base station to other interference terminals except a serving terminal in the coordinating set.

By taking a channel model which adopts Rayleigh fading channels as an example and supposing that the channels are static, at this moment, $\mathbf{H}_{ji}^{(n)}$ can be expressed by omitting superscript (n), i.e., the channel matrix in each time slot is expressed as $\mathbf{H}_{ji}$, and each base station initializes the transmitting beamforming vector $\mathbf{w}_i^{(n-1)}$ which is an eigenvector corresponding to a maximum generalized eigenvalue of $\beta_{ii}\mathbf{H}_{ii}^H\mathbf{H}_{ii}$ and $\dfrac{\sigma^2}{P_i}\mathbf{I}_{N_t} + \sum_{j=1, j\neq i}^{7} \beta_{ji}\mathbf{H}_{ji}^H\mathbf{H}_{ji}$

according to a related SLNR scheme, i.e., $\mathbf{w}_i^{(n-1)} = \max_{\|\mathbf{w}_i^{(n-1)}\|=1} \mathrm{gen.eigenvector}\left( \beta_{ii}\mathbf{H}_{ii}^H\mathbf{H}_{ii}, \dfrac{\sigma^2}{P_i}\mathbf{I}_{N_t} + \sum_{j=1, j\neq i}^{7} \beta_{ji}\mathbf{H}_{ji}^H\mathbf{H}_{ji} \right)$ ; and each base station respectively calculates the receiving beamforming initiation vector estimate value

$\hat{\mathbf{v}}_i^{(n-1)} = \dfrac{\mathbf{H}_{ii}\mathbf{w}_i^{(n-1)}}{\left\| \mathbf{H}_{ii}\mathbf{w}_i^{(n-1)} \right\|}$, and each base station respectively calculates the interference initiation vector

$\sqrt{P_i\beta_{ji}}\mathbf{H}_{ji}\mathbf{w}_i^{(n-1)}$ of each base station to other interference terminals except the serving terminal in the coordinating set.

By taking the channel model which adopts Rayleigh fading channels as an example and assuming that the channels change slowly, central frequency is 2GHz and a Doppler frequency offset is 5Hz, each base station initializes the transmitting beamforming vector $\mathbf{w}_i^{(n-1)}$ which is an eigenvector corresponding to a maximum generalized eigenvalue of $\beta_{ii}\mathbf{H}_{ii}^{(n-1)H}\mathbf{H}_{ii}^{(n-1)}$ and $\dfrac{\sigma^2}{P_i}\mathbf{I}_{N_t} + \sum\limits_{j=1,j\neq i}^{m}\beta_{ji}\mathbf{H}_{ji}^{(n-1)H}\mathbf{H}_{ji}^{(n-1)}$ according to a related SLNR scheme, i.e.,

$$\mathbf{w}_i^{(n-1)} = \max_{\left\|\mathbf{w}_i^{(n-1)}=1\right\|}\text{gen.eigenvector}\left(\beta_{ii}\mathbf{H}_{ii}^{(n-1)H}\mathbf{H}_{ii}^{(n-1)},\dfrac{\sigma^2}{P_i}\mathbf{I}_{N_t} + \sum_{j=1,j\neq i}^{m}\beta_{ji}\mathbf{H}_{ji}^{(n-1)H}\mathbf{H}_{ji}^{(n-1)}\right);$$ and each base station respectively calculates the receiving beamforming initiation vector estimate value $\hat{\mathbf{v}}_i^{(n-1)} = \dfrac{\mathbf{H}_{ii}^{(n-1)}\mathbf{w}_i^{(n-1)}}{\left\|\mathbf{H}_{ii}^{(n-1)}\mathbf{w}_i^{(n-1)}\right\|}$, and each base station respectively calculates the interference initiation vector $\sqrt{P_i\beta_{ji}}\mathbf{H}_{ji}^{(n-1)}\mathbf{w}_i^{(n-1)}$ of each base station to other interference terminals except the serving terminal in the coordinating set.

Several embodiments of the present invention will be described below in detail in combination with FIG. 1.

Embodiment 1:

In combination with a downlink coordinated multipoint transmission system as shown in FIG. 1, it is assumed that channels are static in embodiment 1. In an initialization process, assuming n=1, so,

each base station in the coordinating set initializes the transmitting beamforming vector $\mathbf{w}_i^{(n-1)}$ which is an eigenvector corresponding to a maximum generalized eigenvalue of $\beta_{ii}\mathbf{H}_{ii}^{H}\mathbf{H}_{ii}$ and $\dfrac{\sigma^2}{P_i}\mathbf{I}_{N_t} + \sum\limits_{j=1,j\neq i}^{7}\beta_{ji}\mathbf{H}_{ji}^{H}\mathbf{H}_{ji}$ according to a related SLNR scheme, i.e., $\mathbf{w}_i^{(n-1)} = \max\limits_{\left\|\mathbf{w}_i^{(n-1)}=1\right\|}\text{gen.eigenvector}\left(\beta_{ii}\mathbf{H}_{ii}^{H}\mathbf{H}_{ii},\dfrac{\sigma^2}{P_i}\mathbf{I}_{N_t} + \sum\limits_{j=1,j\neq i}^{7}\beta_{ji}\mathbf{H}_{ji}^{H}\mathbf{H}_{ji}\right);$

each base station in the coordinating set respectively calculates $\hat{\mathbf{v}}_i^{(n-1)} = \dfrac{\mathbf{H}_{ii}\mathbf{w}_i^{(n-1)}}{\left\|\mathbf{H}_{ii}\mathbf{w}_i^{(n-1)}\right\|}$ and the interference vector $\sqrt{P_i\beta_{ji}}\mathbf{H}_{ji}\mathbf{w}_i^{(n-1)}$, and shares $\hat{\mathbf{v}}_i^{(n-1)}$ and $\sqrt{P_i\beta_{ji}}\mathbf{H}_{ji}\mathbf{w}_i^{(n-1)}$ between coordinating base stations;

in the process of the method for implementing coordinated beamforming, processing at a transmitting end comprises that: each base station respectively calculates the transmitting beamforming vector of the current base station in the current time slot based on the maximized SLNR criterion: $\mathbf{w}_i^{(n)} = \dfrac{\left(\mathbf{\Phi}_i^{(n-1)}\right)^{-1}\mathbf{H}_{ii}^{H}\hat{\mathbf{v}}_i^{(n-1)}}{\left\|\left(\mathbf{\Phi}_i^{(n-1)}\right)^{-1}\mathbf{H}_{ii}^{H}\hat{\mathbf{v}}_i^{(n-1)}\right\|}$, wherein,

$$\mathbf{\Phi}_i^{(n-1)} = \sum_{j=1,j\neq i}^{7}P_i\beta_{ji}\mathbf{H}_{ji}^{H}\hat{\mathbf{v}}_j^{(n-1)}\hat{\mathbf{v}}_j^{(n-1)H}\mathbf{H}_{ji}+\sigma^2\mathbf{I}_{N_t}$$ and $\mathbf{I}_{N_t}$ denotes an $N_t$x$N_t$-dimension unit matrix;

each base station respectively transmits, a signal on which beamforming are performed on to the serving terminal thereof according to the calculated transmitting beamforming vector;

each base station, respectively calculates the receiving beamforming vector estimate value of the serving terminal of each base station in the current time slot based on an MMSE criterion: $\hat{\mathbf{v}}_i^{(n)} = \dfrac{\left(\mathbf{\Psi}_i^{(n-1)}\right)^{-1}\mathbf{H}_{ii}\mathbf{w}_i^{(n)}}{\left\|\left(\mathbf{\Psi}_i^{(n-1)}\right)^{-1}\mathbf{H}_{ii}\mathbf{w}_i^{(n)}\right\|}$ , wherein

$$\mathbf{\Psi}_i^{(n-1)} = \sum_{j=1, j\neq i}^{7} P_j\beta_{ij}\mathbf{H}_{ij}\mathbf{w}_j^{(n-1)}\mathbf{w}_j^{(n-1)H}\mathbf{H}_{ij}^H + \sigma^2\mathbf{I}_{N_r}$$ and $\mathbf{I}_{N_r}$ denotes an $N_r$x$N_r$-dimension unit matrix; and the interference vector $\sqrt{P_i\beta_{ji}}\mathbf{H}_{ji}\mathbf{w}_i^{(n)}$; and

shares the calculated receiving beamforming vector estimate value and the interference vector between each base station and the coordinating base stations. For example, the base station $i$ transmits two vectors, i.e., $\hat{\mathbf{v}}_i^{(n)}$ and

$\sqrt{P_i\beta_{ji}}\mathbf{H}_{ji}\mathbf{w}_i^{(n)}$ to the other coordinating base station $j$ ($j\neq i$) in the coordinating set; and

processing at a receiving end comprises the following steps:

each terminal calculates the receiving beamforming vector based on the MMSE criterion, i.e.,:

$$\mathbf{v}_i^{(n)} = \dfrac{\left(\mathbf{\Psi}_i^{(n)}\right)^{-1}\mathbf{H}_{ii}\mathbf{w}_i^{(n)}}{\left\|\left(\mathbf{\Psi}_i^{(n)}\right)^{-1}\mathbf{H}_{ii}\mathbf{w}_i^{(n)}\right\|},$$ wherein $$\mathbf{\Psi}_i^{(n)} = \sum_{j=1, j\neq i}^{7} P_j\beta_{ij}\mathbf{H}_{ij}\mathbf{w}_j^{(n)}\mathbf{w}_j^{(n)H}\mathbf{H}_{ij}^H + \sigma^2\mathbf{I}_{N_r}$$ and $\mathbf{I}_{N_r}$ denotes an

$N_r$x$N_r$-dimension unit matrix;

each terminal receives a signal transmitted by the serving base station to which the terminal belongs by using the calculated receiving beamforming vector;

It is to increase n by one, i.e., $n \leftarrow n+1$; and repeat the processing at the transmitting end and the receiving end until communication is completed.

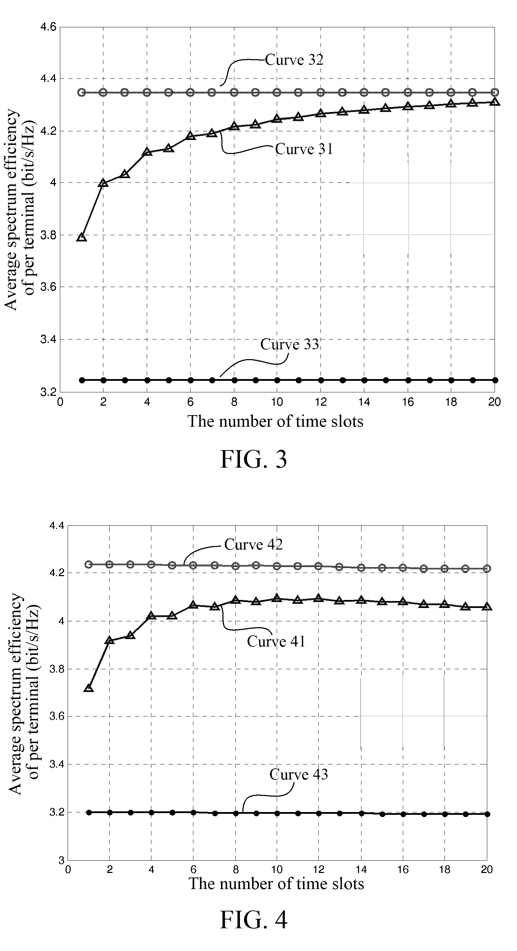

In embodiment 1, it is supposed that a signal-to-noise ratio SNR=10dB and simulation is performed by taking 20 time slots as an example. Respectively $10^5$ times of independent simulation are performed to the related coordinated beamforming scheme based on SLNR (T-SLNR), the joint transmitting/receiving beamforming vector design scheme based on iteration (JTR-CB) and the method for coordinated beamforming provided by the embodiment of the present invention under the same channel conditions, wherein 20 times of iteration are performed in each time slot in the JTR-CB scheme. FIG. 3 is a schematic diagram of comparison between terminal average spectrum efficiency oscillograms of embodiment 1 for coordinated beamforming provided by the embodiment of the present invention and related methods for coordinated beamforming, i.e., a schematic diagram of comparison between the scheme provided by the embodiment of the present invention and T-SLNR and JTR-CB schemes. As shown in FIG. 3, horizontal coordinate denotes the number of time slots and vertical coordinate denotes average spectrum efficiency of per terminal (bit/s/Hz); and a curve marked with triangles, i.e., curve 31 is an average spectrum efficiency curve of a terminal obtained by adopting the method provided by the embodiment of the present invention, a curve marked with hollow circles, i.e., curve 32 is an average spectrum efficiency curve of a terminal obtained by adopting the JTR-CB scheme, and a curve marked with solid circles, i.e., curve 33 is an average spectrum efficiency curve of an terminal obtained by adopting the T-SLNR scheme. In FIG. 3, under the hypothesis of static channels, the scheme provided by the embodiment of the present invention presents a gradually convergent tendency with elapse of time slots. Therefore, it can be seen that the average spectrum efficiency of the scheme provided by the embodiment of the present invention progressively increases with increase of the time slots, and after the number of time slots reaches to 16, the average spectrum efficiency is basically converged to a fixed value. Further, Table 1 is an average spectrum efficiency of a terminal under a static-channel 7-cell 7-terminal scenario. From Table 1, it can be seen that the convergence value is close to the performance of the JTR-CB scheme, is only 3.43% lower than that of the JTR-CB and is increased by 29.36% relative to the T-SLNR scheme.

Table 1

| Method | Average spectrum efficiency of per terminal (bit/s/Hz) | Percentage (%) of increase relative to T-SLNR scheme |
| --- | --- | --- |
| JTR-CB scheme | 4.3466 | 33.95 |

(continued)

| Method | Average spectrum efficiency of per terminal (bit/s/Hz) | Percentage (%) of increase relative to T-SLNR scheme |
|---|---|---|
| Scheme provided by the embodiment of the present invention | 4.1977 | 29.36 |
| T-SLNR scheme | 3.2450 | 0.00 |

To view from the point of information interaction overhead, the information interaction overhead of the scheme provided by the embodiment of the present invention is far smaller than that of the JTR-CB scheme. If the JTR-CB scheme is implemented by adopting a centralized mode, each station needs to transmit seven channel matrixes which have already been known by each station to a hub node, i.e., $\sqrt{P_i \beta_{ji}} \mathbf{H}_{ji} \left( j=1,2,\cdots,7 \right)$, and after the hub node completes calculation, the hub node needs to transmit respective transmitting beamforming vectors $\mathbf{w}_i^{(n)} \left( i=1,2,\cdots,7 \right)$ to seven base stations. However, in the scheme provided by the embodiment of the present invention, all coordinating base stations only need to share the receiving vector estimate value (i.e., $\hat{\mathbf{v}}_i^{(n)}$) of the current base station and the interference vector (i.e., $\sqrt{P_i \beta_{ji}} \mathbf{H}_{ji} \mathbf{w}_i^{(n)}$) to the terminals of the coordinating base stations, an information share amount is only $\dfrac{2(M-1)N_r}{MN_tN_r+N_t} = \dfrac{2}{5}$ of that of the JTR-CB scheme. From the point of calculation complexity, in the scheme of the embodiment of the present invention, each base station only needs to respectively calculate $\mathbf{w}_i^{(n)}$ and $\hat{\mathbf{v}}_i^{(n)}$ for one time in each time slot, while 20 times of calculation are needed in the JTR-CB scheme (iteration times are set to be 20 during simulation).

Embodiment 2:

In combination with a downlink coordinated multipoint transmission system as shown in FIG. 1, it is assumed that channels change slowly, central frequency is 2GHz and a Doppler frequency offset is 5Hz in embodiment 2. In an initialization process, assuming n=1, so,

each base station in the coordinating set initializes the transmitting beamforming vector $\mathbf{w}_i^{(n-1)}$ which is an eigenvector corresponding to a maximum generalized eigenvalue of $\beta_{ii} \mathbf{H}_{ii}^{(n-1)H} \mathbf{H}_{ii}^{(n-1)}$ and $\dfrac{\sigma^2}{P_i}\mathbf{I}_{N_t} + \sum\limits_{j=1,j\neq i}^{7} \beta_{ji} \mathbf{H}_{ji}^{(n-1)H} \mathbf{H}_{ji}^{(n-1)}$ according to a related SLNR scheme i.e.,

$$\mathbf{w}_i^{(n-1)} = \max_{\left\| \mathbf{w}_i^{(n-1)}=1 \right\|} \mathrm{gen.eigenvector}\left( \beta_{ii} \mathbf{H}_{ii}^{(n-1)H} \mathbf{H}_{ii}^{(n-1)}, \frac{\sigma^2}{P_i}\mathbf{I}_{N_t} + \sum_{j=1,j\neq i}^{7} \beta_{ji} \mathbf{H}_{ji}^{(n-1)H} \mathbf{H}_{ji}^{(n-1)} \right);$$

each base station in the coordinating set respectively calculates $\hat{\mathbf{v}}_i^{(n-1)} = \dfrac{\mathbf{H}_{ii}^{(n-1)}\mathbf{w}_i^{(n-1)}}{\left\| \mathbf{H}_{ii}^{(n-1)}\mathbf{w}_i^{(n-1)} \right\|}$ and the interference vector

$\hat{\mathbf{v}}_i^{(n-1)} = \dfrac{\mathbf{H}_{ii}^{(n-1)}\mathbf{w}_i^{(n-1)}}{\left\| \mathbf{H}_{ii}^{(n-1)}\mathbf{w}_i^{(n-1)} \right\|}$, and shares $\hat{\mathbf{v}}_i^{(n-1)}$ and $\sqrt{P_i \beta_{ji}} \mathbf{H}_{ji}^{(n-1)}\mathbf{w}_i^{(n-1)}$ between coordinating base stations;

in the process of the method for implementing coordinated beamforming, processing at a transmitting end comprises that:

each station respectively calculates the transmitting beamforming vector of the current base station in the current time slot based on the maximized SLNR criterion: $\mathbf{w}_i^{(n)} = \dfrac{\left(\boldsymbol{\Phi}_i^{(n-1)}\right)^{-1} \mathbf{H}_{ii}^{(n-1)H} \hat{\mathbf{v}}_i^{(n-1)}}{\left\| \left(\boldsymbol{\Phi}_i^{(n-1)}\right)^{-1} \mathbf{H}_{ii}^{(n-1)H} \hat{\mathbf{v}}_i^{(n-1)} \right\|}$ , wherein,

$$\boldsymbol{\Phi}_i^{(n-1)} = \sum_{j=1, j\neq i}^{7} P_i \beta_{ji} \mathbf{H}_{ji}^{(n-1)H} \hat{\mathbf{v}}_j^{(n-1)} \hat{\mathbf{v}}_j^{(n-1)H} \mathbf{H}_{ji}^{(n-1)} + \sigma^2 \mathbf{I}_{N_t}$$ and $\mathbf{I}_{N_t}$ denotes an $N_t \times N_t$-dimension unit matrix;

each station respectively transmits a signal on which beamforming has been performed to the serving terminal thereof according to the calculated transmitting beamforming vector;

each station respectively calculates the receiving beamforming vector estimate value of the serving terminal of each base station in the current time slot based on an MMSE criterion: $\hat{\mathbf{v}}_i^{(n)} = \dfrac{\left(\boldsymbol{\Psi}_i^{(n-1)}\right)^{-1} \mathbf{H}_{ii}^{(n)} \mathbf{w}_i^{(n)}}{\left\| \left(\boldsymbol{\Psi}_i^{(n-1)}\right)^{-1} \mathbf{H}_{ii}^{(n)} \mathbf{w}_i^{(n)} \right\|}$ ,

wherein $\boldsymbol{\Psi}_i^{(n-1)} = \sum_{j=1, j\neq i}^{7} P_j \beta_{ij} \mathbf{H}_{ij}^{(n-1)} \mathbf{w}_j^{(n-1)} \mathbf{w}_j^{(n-1)H} \mathbf{H}_{ij}^{(n-1)H} + \sigma^2 \mathbf{I}_{N_r}$ and $\mathbf{I}_{N_r}$ denotes an $N_r \times N_r$-dimension unit matrix; and

shares the calculated receiving beamforming vector estimate value and the interference vector between each base station and the coordinating base stations. For example, the base station $i$ transmits two vectors, i.e., $\hat{\mathbf{v}}_i^{(n-1)}$ and

$\sqrt{P_i \beta_{ji}} \mathbf{H}_{ji}^{(n-1)} \mathbf{w}_i^{(n-1)}$ to the other coordinating base station $j$ (j≠i) in the coordinating set;

processing at a receiving end comprises that:

each terminal calculates t the receiving beamforming vector based on the MMSE criterion, i.e.,:

$$\mathbf{v}_i^{(n)} = \frac{\left(\boldsymbol{\Psi}_i^{(n)}\right)^{-1} \mathbf{H}_{ii}^{(n)} \mathbf{w}_i^{(n)}}{\left\| \left(\boldsymbol{\Psi}_i^{(n)}\right)^{-1} \mathbf{H}_{ii}^{(n)} \mathbf{w}_i^{(n)} \right\|}$$ , wherein $\boldsymbol{\Psi}_i^{(n)} = \sum_{j=1, j\neq i}^{7} P_j \beta_{ij} \mathbf{H}_{ij}^{(n)} \mathbf{w}_j^{(n)} \mathbf{w}_j^{(n)H} \mathbf{H}_{ij}^{(n)H} + \sigma^2 \mathbf{I}_{N_r}$

and $\mathbf{I}_{N_r}$ denotes an $N_r \times N_r$-dimension unit matrix;

each terminal receives a signal transmitted by the serving base station to which the terminal belongs by using the calculated receiving beamforming vector;

it is to increase n by one, *i.e., n ← n*+1; and repeat the processing at the transmitting end and the receiving end until communication is completed.

In embodiment 2, it is assumed that a signal-to-noise ratio SNR=10dB and simulation is performed by taking 20 time slots as an example. Respectively $10^5$ times of independent simulation are performed on the related coordinated beamforming scheme based on SLNR (T-SLNR), the joint transmitting/receiving beamforming vector design scheme based on iteration (JTR-CB) and the method for coordinated beamforming provided by the embodiment of the present invention under the same channel conditions, wherein 20 times of iteration are performed in each time slot in the JTR-CB scheme. FIG. 4 is a schematic diagram of comparison between terminal average spectrum efficiency oscillograms of embodiment 2 for coordinated beamforming provided by the embodiment of the present invention and related methods for coordinated beamforming, i.e., a schematic diagram of comparison between the scheme provided by the embodiment of the present invention and T-SLNR and JTR-CB schemes. As shown in FIG. 4, horizontal coordinate denotes the number of time slots and vertical coordinate denotes terminal average spectrum efficiency (bit/s/Hz); and a curve marked with triangles, i.e., curve 41 is an average spectrum efficiency curve of a terminal obtained by adopting the method provided by the embodiment of the present invention, a curve marked with hollow circles, i.e., curve 42 is an average spectrum efficiency curve of a terminal obtained by adopting the JTR-CB scheme, and a curve marked with solid circles, i.e., curve 43 is an average spectrum efficiency curve of a terminal obtained by adopting the T-SLNR scheme. In FIG. 4, under the condition of slowly changing channels, the performance of the scheme provided by the embodiment of the present invention decreases relative to static channels. Further, Table 2 is = average spectrum efficiency of per terminal under a slowly-changing-channel (Doppler frequency offset=5Hz) 7-cell 7-terminal scenario. From Table 2, it can be seen that, when a maximum Doppler frequency offset is 5Hz, the average spectrum efficiency of the scheme provided by the embodiment of the present invention is 4.49% lower than that of the JTR-CB. However, compared with the T-SLNR scheme, the performance advantage of the scheme provided by the embodiment of the present invention is still obvious.

Table 2

| Algorithm | Average spectrum efficiency of per terminal (bit/s/Hz) | Percentage (%) of increase relative to T-SLNR scheme |
| --- | --- | --- |
| JTR-CB scheme | 4.2274 | 32.27 |
| Scheme provided by the embodiment of the present invention | 4.0378 | 26.34 |
| T-SLNR scheme | 3.1960 | 0.00 |

To view from the point of information interaction overhead, the information interaction overhead of the scheme provided by the embodiment of the present invention is far smaller than that of the JTR-CB scheme. If the JTR-CB scheme is implemented by adopting a centralized mode, each station needs to transmit seven channel matrixes which have already been known by each station to a hub node, i.e., $\sqrt{P_i \beta_{ji}} \mathbf{H}_{ji}^{(n-1)} \left( j=1,2,\cdots,7 \right)$, and after the hub node completes calculation, the hub node needs to transmit respective transmission beamforming vectors $\mathbf{w}_i^{(n)}$ ($i$=1,2,...,7) to seven base stations. However, in the scheme provided by the embodiment of the present invention, all coordinating base stations only need to share the receiving vector estimate value (i.e., $\hat{\mathbf{v}}_i^{(n-1)}$ of the current base station and the interference vector (i.e., $\sqrt{P_i \beta_{ji}} \mathbf{H}_{ji}^{(n-1)} \mathbf{w}_i^{(n-1)}$) to the terminals of the coordinating base stations, an information share amount is only $\dfrac{2(M-1)N_r}{MN_t N_r + N_t} = \dfrac{2}{5}$ of that of the JTR-CB scheme. From the point of calculation complexity, in the scheme of the embodiment of the present invention, each base station only needs to respectively calculate $\mathbf{w}_i^{(n)}$ and $\hat{\mathbf{v}}_i^{(n)}$ for one time in each time slot, while 20 times of calculation are needed in the JTR-CB scheme (iteration times are set to be 20 during simulation).

Embodiment 3:

In combination with a downlink coordinated multipoint transmission system as shown in FIG. 1, it is assumed that M=3, channels change slowly, central frequency is 2GHz and a Doppler frequency offset is 5Hz in embodiment 3. In an initialization process, assuming n=1, so,

each base station in the coordinating set initializes the transmitting beamforming vector $\mathbf{w}_i^{(n-1)}$ which is an eigenvector corresponding to a maximum generalized eigenvalue of $\beta_{ii} \mathbf{H}_{ii}^{(n-1)H} \mathbf{H}_{ii}^{(n-1)}$ and $\dfrac{\sigma^2}{P_i} \mathbf{I}_{N_t} + \sum\limits_{j=1,j\neq i}^{3} \beta_{ji} \mathbf{H}_{ji}^{(n-1)H} \mathbf{H}_{ji}^{(n-1)}$ according to a related SLNR scheme, i.e., $\mathbf{w}_i^{(n-1)} = \max\limits_{\|\mathbf{w}_i^{(n-1)}=1\|} \text{gen.eigenvector} \left( \beta_{ii} \mathbf{H}_{ii}^{(n-1)H} \mathbf{H}_{ii}^{(n-1)}, \dfrac{\sigma^2}{P_i} \mathbf{I}_{N_t} + \sum\limits_{j=1,j\neq i}^{3} \beta_{ji} \mathbf{H}_{ji}^{(n-1)H} \mathbf{H}_{ji}^{(n-1)} \right)$;

each base station in the coordinating set respectively calculates $\hat{\mathbf{v}}_i^{(n-1)} = \dfrac{\mathbf{H}_{ii}^{(n-1)} \mathbf{w}_i^{(n-1)}}{\left\| \mathbf{H}_{ii}^{(n-1)} \mathbf{w}_i^{(n-1)} \right\|}$ and the interference vector $\sqrt{P_i \beta_{ji}} \mathbf{H}_{ji}^{(n-1)} \mathbf{w}_i^{(n-1)}$, and shares $\hat{\mathbf{v}}_i^{(n-1)}$ and $\sqrt{P_i \beta_{ji}} \mathbf{H}_{ji}^{(n-1)} \mathbf{w}_i^{(n-1)}$ between coordinating base stations;

in the process of the method for coordinated beamforming, processing at a transmitting end comprises that:

each station calculates the transmitting beamforming vector of the current base station in the current time slot based on the maximized SLNR criterion: $\mathbf{w}_i^{(n)} = \dfrac{\left(\mathbf{\Phi}_i^{(n-1)}\right)^{-1} \mathbf{H}_{ii}^{(n-1)H} \hat{\mathbf{v}}_i^{(n-1)}}{\left\| \left(\mathbf{\Phi}_i^{(n-1)}\right)^{-1} \mathbf{H}_{ii}^{(n-1)H} \hat{\mathbf{v}}_i^{(n-1)} \right\|}$ , wherein,

$$\mathbf{\Phi}_i^{(n-1)} = \sum_{j=1, j\neq i}^{3} P_i \beta_{ji} \mathbf{H}_{ji}^{(n-1)H} \hat{\mathbf{v}}_j^{(n-1)} \hat{\mathbf{v}}_j^{(n-1)H} \mathbf{H}_{ji}^{(n-1)} + \sigma^2 \mathbf{I}_{N_t}$$ and $\mathbf{I}_{N_t}$ denotes an $N_t$x$N_t$-dimension unit matrix;

each base station respectively transmits a signal on which beamforming has been performed to the serving terminal thereof according to the calculated transmitting beamforming vector;

each base station respectively calculates the receiving beamforming vector estimate value of the serving terminal of each base station in the current time slot based on an MMSE criterion: $\hat{\mathbf{v}}_i^{(n)} = \dfrac{\left(\mathbf{\Psi}_i^{(n-1)}\right)^{-1} \mathbf{H}_{ii}^{(n)} \mathbf{w}_i^{(n)}}{\left\| \left(\mathbf{\Psi}_i^{(n-1)}\right)^{-1} \mathbf{H}_{ii}^{(n)} \mathbf{w}_i^{(n)} \right\|}$ ,

wherein $\mathbf{\Psi}_i^{(n-1)} = \sum_{j=1, j\neq i}^{3} P_j \beta_{ij} \mathbf{H}_{ij}^{(n-1)} \mathbf{w}_j^{(n-1)} \mathbf{w}_j^{(n-1)H} \mathbf{H}_{ij}^{(n-1)H} + \sigma^2 \mathbf{I}_{N_r}$ and $\mathbf{I}_{N_r}$ denotes an $N_r$x$N_r$-dimension unit matrix; and

shares the calculated receiving beamforming vector estimate value and the interference vector between each base station and the coordinating base stations. For example, the base station $i$ transmits two vectors, i.e., $\hat{\mathbf{v}}_i^{(n-1)}$ and

$\sqrt{P_i \beta_{ji}} \mathbf{H}_{ji}^{(n-1)} \mathbf{w}_i^{(n-1)}$ to the other coordinating base station $j$ ($j\neq i$) in the coordinating set;

processing at a receiving end comprises that:

each terminal calculates the receiving beamforming vector based on the MMSE criterion, i.e.,:

$\mathbf{v}_i^{(n)} = \dfrac{\left(\mathbf{\Psi}_i^{(n)}\right)^{-1} \mathbf{H}_{ii}^{(n)} \mathbf{w}_i^{(n)}}{\left\| \left(\mathbf{\Psi}_i^{(n)}\right)^{-1} \mathbf{H}_{ii}^{(n)} \mathbf{w}_i^{(n)} \right\|}$ , wherein $\mathbf{\Psi}_i^{(n)} = \sum_{j=1, j\neq i}^{3} P_j \beta_{ij} \mathbf{H}_{ij}^{(n)} \mathbf{w}_j^{(n)} \mathbf{w}_j^{(n)H} \mathbf{H}_{ij}^{(n)H} + \sigma^2 \mathbf{I}_{N_r}$ and

$\mathbf{I}_{N_r}$ denotes an $N_r$x$N_r$-dimension unit matrix;

each terminal receives a signal transmitted by the serving base station to which the terminal belongs by using the calculated receiving beamforming vector;

it is to increase by one, i.e., $n\leftarrow n+1$; and repeat the processing at the transmitting end and the receiving end until communication is completed.

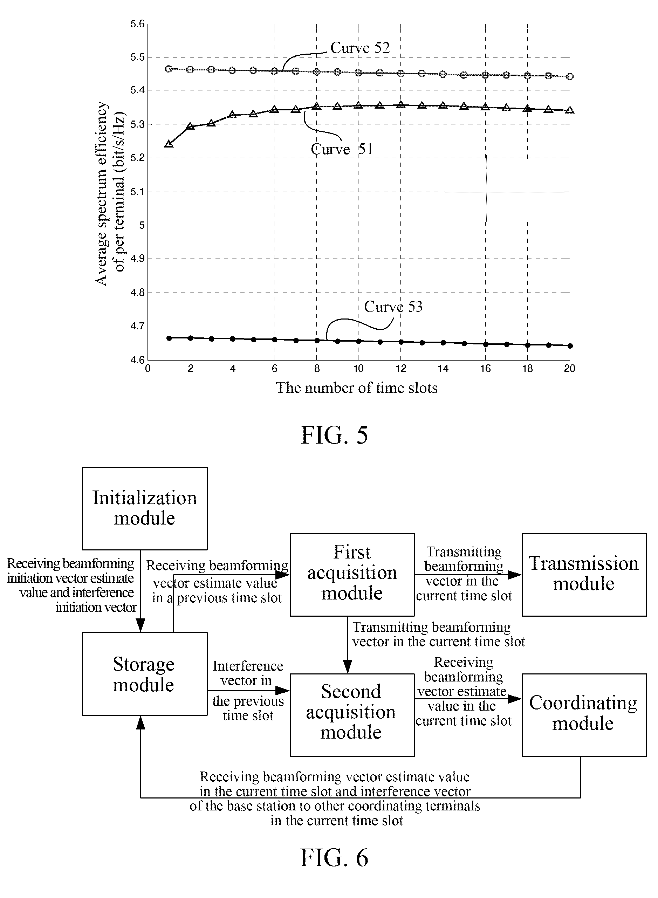

In embodiment 3, it is assumed that a signal-to-noise ratio SNR=10dB and simulation is performed by taking 20 time slots as an example. Respectively $10^5$ times of independent simulation are performed on the related coordinated beamforming scheme based on SLNR (T-SLNR), the joint transmitting/receiving beamforming vector design scheme based on iteration (JTR-CB) and the method for coordinated beamforming provided by the embodiment of the present invention under the same channel conditions, wherein 20 times of iteration are performed in each time slot in the JTR-CB scheme. FIG. 5 is a schematic diagram of comparison between average spectrum efficiency of per terminal oscillograms of embodiment 3 for coordinated beamforming provided by the embodiment of the present invention and related methods for coordinated beamforming, i.e., a schematic diagram of comparison between the scheme provided by the embodiment of the present invention and T-SLNR and JTR-CB schemes. As shown in FIG. 5, horizontal coordinate denotes the number of time slots and vertical coordinate denotes average spectrum efficiency of per terminal (bit/s/Hz); and a curve marked with triangles, i.e., curve 51 is an average spectrum efficiency curve of a terminal obtained by adopting the method provided by the embodiment of the present invention, a curve marked with hollow circles, i.e., curve 52 is an average spectrum efficiency curve of a terminal obtained by adopting the JTR-CB scheme, and a curve marked with solid circles, i.e., curve 53 is an average spectrum efficiency curve of a terminal obtained by adopting the T-SLNR scheme. In FIG. 5, when the maximum Doppler frequency offset is 5Hz, the average spectrum efficiency performance of the scheme provided by the embodiment of the present invention is 2.14% lower than that of the JTR-CB scheme and is increased by 14.65% relative to the T-SLNR scheme. Compared with the T-SLNR scheme, the performance advantage of the scheme provided by the embodiment of the present invention is still obvious. Further, Table 3 is average spectrum efficiency of per terminal under a slowly-changing-channel (Doppler frequency offset=5Hz) 3-cell 3-terminal scenario. In combination with comparison between FIG. 5 and FIG 4, it can be seen that, the greater the scale of the coordinating set is, the greater the amplitude of performance increase of the scheme provided by the embodiment of the present invention relative to the T-SLNR scheme is.

Table 3

| Algorithm | Average spectrum efficiency of per terminal (bit/s/Hz) | Percentage (%) of increase relative to T-SLNR scheme |
|---|---|---|
| JTR-CB scheme | 5.4534 | 17.15 |
| Scheme provided by the embodiment of the present invention | 5.3368 | 14.65 |
| T-SLNR scheme | 4.6549 | 0.00 |

To view from the point of information interaction overhead, the information interaction overhead of the scheme provided by the embodiment of the present invention is far smaller than that of the JTR-CB scheme. If the JTR-CB scheme is implemented by adopting a centralized mode, each station needs to transmit three channel matrixes which have already been known by each station to a hub node, i.e., $\sqrt{P_i\beta_{ji}}\mathbf{H}_{ji}^{(n-1)}\left(j=1,2,3\right)$, and after the hub node completes calculation, the hub node needs to transmit respective transmitting beamforming vectors $\mathbf{w}_i^{(n)}$ ($i$= 1,2,3) to three base stations. However, in the scheme provided by the embodiment of the present invention, all coordinating base stations only need to share the receiving vector estimate value (i.e., $\hat{\mathbf{v}}_i^{(n-1)}$) of the current base station and the interference vector (i.e., $\sqrt{P_i\beta_{ji}}\mathbf{H}_{ji}^{(n-1)}\mathbf{w}_i^{(n-1)}$) to the terminals of the coordinating base stations, an information share amount is only $\dfrac{2\left(M-1\right)N_r}{MN_tN_r+N_t}=\dfrac{2}{7}$ of that of the JTR-CB scheme. From the point of calculation complexity, in the scheme of the embodiment of the present invention, each base station only needs to respectively calculate $\mathbf{w}_i^{(n)}$ and $\hat{\mathbf{v}}_i^{(n)}$ for one time in each time slot, while 20 times of calculation are needed in the JTR-CB scheme (iteration times are set to be 20 during simulation).

In combination with FIG. 1, the embodiment of the present invention further provides a base station, wherein the base station is in a coordinating set, and the base station and other base stations in the coordinating set are mutually coordinating base stations; and in the coordinating set, each base station serves one terminal and serves the terminal by adopting a coordinated beamforming mode. FIG. 6 is a schematic diagram of a component structure of a base station provided by the embodiment of the present invention. As shown in FIG. 6, the base station provided by the embodiment of the present invention at least comprises a first acquisition module, a transmission module, a second acquisition module and a coordinating module, wherein,
the first acquisition module is configured to acquire a transmitting beamforming vector in a current time slot according to a receiving beamforming vector estimate value of each interference, shared in a previous time slot;
the transmission module is configured to perform beamforming on a signal by using the transmitting beamforming vector; and is further configured to transmit the signal on which beamforming have been performed on a serving terminal thereof;
the second acquisition module is configured to acquire a receiving beamforming vector estimate value in the current time slot according to the transmitting beamforming vector in the current time slot and an interference vector shared in the previous time slot; and
the coordinating module is configured to store the acquired receiving beamforming vector estimate value in the current time slot and an interference vector of the base station to other coordinating terminals in the current time slot in a storage module, and share the acquired receiving beamforming vector estimate value and the interference vector with all coordinating base stations in the coordinating set.
The base station further comprises an initialization module, wherein the initialization module is configured to initialize the transmitting beamforming vector according to an SLNR scheme; calculate an initial receiving beamforming vector estimate value and an interference initiation vector thereof to other interference terminals except a serving terminal in the coordinating set; and store the calculated initial receiving beamforming vector estimate value and interference initiation vector in the storage module.
The embodiments are just preferred embodiments of the present invention and are not used for limiting the protection scope of the present invention. Any modification, equivalent replacement, improvement and the like made within the spirit and principle of the present invention shall also be included in the protection scope of the present invention.

Industrial Applicability

The technical scheme provided by the embodiment of the present invention significantly improves system performance, does not need a terminal to feed back the receiving vector information, and significantly decreases system overhead; and simultaneously realizes distributed implementation of all coordinating base stations. Therefore, the present invention has very strong industrial applicability.

**Claims**

1. A method for implementing coordinated beamforming, comprising:

   acquiring, by a base station, a transmitting beamforming vector in a current time slot according to a receiving beamforming vector estimate value of each interference terminal shared by each base station in a coordinating set in a previous time slot;
   acquiring, by the base station, a receiving beamforming vector estimate value in the current time slot according to the transmitting beamforming vector in the current time slot and an interference vector shared in the previous time slot; and
   sharing, by the base station, the acquired receiving beamforming vector estimate value in the current time slot and an interference vector of the base station to other terminals with all coordinating base stations in the coordinating set.

2. The method for implementing coordinated beamforming according to claim 1, wherein the method further comprises: performing, by each base station in the coordinating set, initialization:

   initializing, by each base station in the coordinating set, the transmitting beamforming vector according to a maximized SLNR Signal-to-Leakage-and-Noise Ratio (SLNR) scheme; and
   respectively calculating, by each base station in the coordinating set, a receiving beamforming vector initiation estimate value and an interference initiation vector of each base station to other interference terminals except a serving terminal in the coordinating set.

3. The method for implementing coordinated beamforming according to claim 2, wherein:

   the step of initializing, by each base station in the coordinating set, the transmitting beamforming vector according to the maximized SLNR scheme comprises:
   initializing, by each base station, the transmitting beamforming vector $\mathbf{w}_i^{(n-1)}$ which is an eigenvector corresponding to a maximum generalized eigenvalue of $\beta_{ii}\mathbf{H}_{ii}^H\mathbf{H}_{ii}$ and $\dfrac{\sigma^2}{P_i}\mathbf{I}_{N_t} + \sum_{j=1,j\neq i}^{m} \beta_{ji}\mathbf{H}_{ji}^H\mathbf{H}_{ji}$ according to a related SLNR scheme, that is $\mathbf{w}_i^{(n-1)} = \max_{\|\mathbf{w}_i^{(n-1)}\|=1}\text{gen.eigenvector}\left(\beta_{ii}\mathbf{H}_{ii}^H\mathbf{H}_{ii}, \dfrac{\sigma^2}{P_i}\mathbf{I}_{N_t} + \sum_{j=1,j\neq i}^{m} \beta_{ji}\mathbf{H}_{ji}^H\mathbf{H}_{ji}\right)$,
   wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\mathbf{H}_{ji}^{(n)}$ can be expressed by omitting superscript (n) when channels are in a static state, that is, the channel matrix in each time slot is expressed as $\mathbf{H}_{ji}$, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$ denotes a transmitting beamforming vector of the base station $i$ in the nth time slot, superscript $H$ denotes conjugate transpose, transmitting power of the base station $i$ is $P_i$ and noise power is $\sigma^2$;

   the step of respectively calculating, by each base station in the coordinating set, the receiving beamforming vector initiation estimate value comprises:

   respectively calculating, by each base station, the receiving beamforming vector initiation estimate value

$$\hat{\mathbf{v}}_i^{(n-1)} = \frac{\mathbf{H}_{ii}\mathbf{w}_i^{(n-1)}}{\left\|\mathbf{H}_{ii}\mathbf{w}_i^{(n-1)}\right\|}$$ , wherein $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot; and

the step of respectively calculating, by each base station in the coordinating set, the interference initiation vector of each base station to other interference terminals except the serving terminal in the coordinating set comprises: respectively calculating, by each base station, an interference vector initiation value $\sqrt{P_i\beta_{ji}}\,\mathbf{H}_{ji}\mathbf{w}_i^{(n-1)}$ of each base station to other interference terminals except the serving terminal in the coordinating set.

4. The method for implementing coordinated beamforming according to claim 2, wherein:

the step of initializing, by each base station in the coordinating set, the transmitting beamforming vector according to the maximized SLNR scheme comprises: initializing, by each base station, the transmitting beamforming vector $\mathbf{w}_i^{(n-1)}$ which is an eigenvector corresponding to a maximum generalized eigenvalue of $\beta_{ii}\mathbf{H}_{ii}^{(n-1)H}\mathbf{H}_{ii}^{(n-1)}$ and $\dfrac{\sigma^2}{P_i}\mathbf{I}_{N_t} + \displaystyle\sum_{j=1,j\neq i}^{m}\beta_{ji}\mathbf{H}_{ji}^{(n-1)H}\mathbf{H}_{ji}^{(n-1)}$ according to a related SLNR scheme, that is,

$$\mathbf{w}_i^{(n-1)} = \max_{\left\|\mathbf{w}_i^{(n-1)}\right\|=1}\text{gen.eigenvector}\left(\beta_{ii}\mathbf{H}_{ii}^{(n-1)H}\mathbf{H}_{ii}^{(n-1)}, \frac{\sigma^2}{P_i}\mathbf{I}_{N_t} + \sum_{j=1,j\neq i}^{m}\beta_{ji}\mathbf{H}_{ji}^{(n-1)H}\mathbf{H}_{ji}^{(n-1)}\right)$$ , wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$ denotes a transmitting beamforming vector of the base station $i$ in the nth time slot, superscript $H$ denotes conjugate transpose, transmitting power of the base station $i$ is $P_i$ and noise power is $\sigma^2$;

the step of respectively calculating, by each base station in the coordinating set, the receiving beamforming vector initiation estimate value comprises: respectively calculating, by each base station, the receiving beamforming vector initiation estimate value $\hat{\mathbf{v}}_i^{(n-1)} = \dfrac{\mathbf{H}_{ii}^{(n-1)}\mathbf{w}_i^{(n-1)}}{\left\|\mathbf{H}_{ii}^{(n-1)}\mathbf{w}_i^{(n-1)}\right\|}$ , wherein $\mathbf{v}_i^{(n)}$ ($N_r$x1 dimensions, $\left\|\mathbf{v}_i^{(n)}\right\|=1$) denotes the receiving beamforming vector of the terminal $i$ in the nth time slot; and

the step of respectively calculating, by each base station in the coordinating set, the interference initiation vector of each base station to other interference terminals except the serving terminal in the coordinating set comprises : respectively calculating, by each base station, the interference vector initiation value $\sqrt{P_i\beta_{ji}}\,\mathbf{H}_{ji}^{(n-1)}\mathbf{w}_i^{(n-1)}$ of each base station to other interference terminals except the serving terminal in the coordinating set.

5. The method for implementing coordinated beamforming according to claim 1 or 2, wherein the step of acquiring the transmitting beamforming vector in the current time slot comprises:

calculating, by the base station, the transmitting beamforming vector of the present base station in the current time slot based on a maximized SLNR criterion according to the receiving beamforming vector estimate value of each interference terminal shared in the previous time slot.

6. The method for implementing coordinated beamforming according to claim 5, wherein the step of calculating, by the base station, the transmitting beamforming vector of the present base station in the current time slot based on the maximized SLNR criterion according to the receiving beamforming vector estimate value of each interference terminal shared in the previous time slot, comprises:

calculating the transmitting beamforming vector of the present base station in the current time slot according to the following formula: $\mathbf{w}_i^{(n)} = \dfrac{\left(\boldsymbol{\Phi}_i^{(n-1)}\right)^{-1}\mathbf{H}_{ii}^H\hat{\mathbf{v}}_i^{(n-1)}}{\left\|\left(\boldsymbol{\Phi}_i^{(n-1)}\right)^{-1}\mathbf{H}_{ii}^H\hat{\mathbf{v}}_i^{(n-1)}\right\|}$ , wherein

$$\boldsymbol{\Phi}_i^{(n-1)} = \sum_{j=1, j\neq i}^{m} P_i\beta_{ji}\mathbf{H}_{ji}^{(n-1)H}\hat{\mathbf{v}}_j^{(n-1)}\hat{\mathbf{v}}_j^{(n-1)H}\mathbf{H}_{ji}^{(n-1)}+\sigma^2\mathbf{I}_{N_t} ,$$

wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes a transmitting beamforming vector of the base station $i$ in the nth time slot, $\mathbf{v}_i^{(n)}$ ($N_r$x1 dimensions, $\left\|\mathbf{v}_i^{(n)}\right\|=1$) denotes the receiving beamforming vector of the terminal $i$ in the nth time slot, superscript $H$ denotes conjugate transpose, transmitting power of the base station $i$ is $P_i$, noise power is $\sigma^2$ and $\mathbf{I}_{N_t}$ denotes an $N_t$x$N_t$-dimension unit matrix.

7. The method for implementing coordinated beamforming according to claim 1 or 2, wherein the step of acquiring the receiving beamforming vector estimate value in the current time slot comprises:

   calculating, by the base station, the receiving beamforming vector estimate value of a serving terminal in the current time slot based on an Minimum Mean Squared Error (MMSE) criterion according to the transmitting beamforming vector in the current time slot and the interference vector shared in the previous time slot.

8. The method for implementing coordinated beamforming according to claim 7, wherein the step of calculating, by the base station, the receiving beamforming vector estimate value of the serving terminal in the current time slot based on the MMSE criterion according to the transmitting beamforming vector in the current time slot and the interference vector shared in the previous time slot comprises:

   calculating the receiving beamforming vector estimate value of the serving terminal in the current time slot according to the following formula: $\hat{\mathbf{v}}_i^{(n)} = \dfrac{\left(\boldsymbol{\Psi}_i^{(n-1)}\right)^{-1}\mathbf{H}_{ii}\mathbf{w}_i^{(n)}}{\left\|\left(\boldsymbol{\Psi}_i^{(n-1)}\right)^{-1}\mathbf{H}_{ii}\mathbf{w}_i^{(n)}\right\|}$ , wherein

   $$\boldsymbol{\Psi}_i^{(n-1)} = \sum_{j=1, j\neq i}^{m} P_j\beta_{ij}\mathbf{H}_{ij}^{(n-1)}\mathbf{w}_j^{(n-1)}\mathbf{w}_j^{(n-1)H}\mathbf{H}_{ij}^{(n-1)H} + \sigma^2\mathbf{I}_{N_r}$$ , wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal j in an $n$th time slot, $\beta_{ji}$ denotes a path loss from the base station $i$ to the terminal j, $\mathbf{w}_i^{(n)}$ ($N_t$x1 dimensions, $\left\|\mathbf{w}_i^{(n)}\right\|=1$ denotes the transmitting beamforming vector of the base station $i$ in the $n$th time slot, $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot, superscript $H$ denotes conjugate transpose, transmitting power of the base station $i$ is $P_i$, noise power is $\sigma^2$ and $\mathbf{I}_{N_r}$ denotes an $N_r$x$N_r$-dimension unit matrix;

   and the interference vector $\sqrt{P_i\beta_{ji}}\mathbf{H}_{ji}\mathbf{w}_i^{(n)}$ .

9. The method for implementing coordinated beamforming according to claim 1 or 2, wherein the method further comprises:

calculating, by each terminal, the receiving beamforming vector based on an MMSE criterion, that is

$$\mathbf{v}_i^{(n)} = \frac{\left(\mathbf{\Psi}_i^{(n)}\right)^{-1}\mathbf{H}_{ii}\mathbf{w}_i^{(n)}}{\left\|\left(\mathbf{\Psi}_i^{(n)}\right)^{-1}\mathbf{H}_{ii}\mathbf{w}_i^{(n)}\right\|} \quad , \quad \text{wherein} \quad \mathbf{\Psi}_i^{(n)} = \sum_{j=1, j\neq i}^{m} P_j\beta_{ij}\mathbf{H}_{ij}^{(n)}\mathbf{w}_j^{(n)}\mathbf{w}_j^{(n)H}\mathbf{H}_{ij}^{(n)H} + \sigma^2\mathbf{I}_{N_r},$$

wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes the transmitting beamforming vector of the base station $i$ in the nth time slot, $\mathbf{v}_i^{(n)}$ ($N_r$x1 dimensions, $\left\|\mathbf{v}_i^{(n)}\right\|=1$) denotes the receiving beamforming vector of the terminal $i$ in the nth time slot, superscript $H$ denotes conjugate transpose, transmitting power of the base station $i$ is $P_i$, noise power is $\sigma^2$ and $\mathbf{I}_{N_r}$ denotes an $N_r$x$N_r$-dimension unit matrix;

receiving, by each terminal, a signal transmitted by a serving base station to which the terminal belongs by using the calculated receiving beamforming vector;

increasing n by one, that $is, n \leftarrow n$+1; and repeating processing at a transmitting end and a receiving end until communication is completed.

10. The method for implementing coordinated beamforming according to claim 1 or 2, wherein the step of sharing, by the base station, the acquired receiving beamforming vector estimate value in the current time slot and the interference vector of the base station to other terminals with all coordinating base stations in the coordinating set comprises:

   transmitting, by the base station, the acquired receiving beamforming vector estimate value in the current time slot and the interference vector of the base station to other terminals to other coordinating base stations in the coordinating set.

11. A base station, comprising a first acquisition module, a transmission module, a second acquisition module and a coordinating module, wherein,
   the first acquisition module is configured to acquire a transmitting beamforming vector in a current time slot according to a receiving beamforming vector estimate value of each interference terminal shared by each base station in a coordinating set in a previous time slot,;
   the transmission module is configured to perform beamforming on a signal by using the transmitting beamforming vector;
   the second acquisition module is configured to acquire a receiving beamforming vector estimate value in a current time slot according to the transmitting beamforming vector in a current time slot and an interference vector shared in a previous time slot; and
   the coordinating module is configured to store the acquired receiving beamforming vector estimate value in the current time slot and an interference vector of the base station to other coordinating terminals in the current time slot in a storage module, and share the acquired receiving beamforming vector estimate value and the interference vector with all coordinating base stations in the coordinating set.

12. The base station according to claim 11, wherein the base station further comprises an initialization module, wherein:

   the initialization module is configured to initialize the transmitting beamforming vector according to a Signal-to-Leakage-and-Noise Ratio (SLNR) scheme; calculate a receiving beamforming vector initiation estimate value and an interference initiation vector of the base station to other interference terminals except a serving terminal in the coordinating set; and store the calculated receiving beamforming vector initiation estimate value and interference initiation vector in the storage module.

13. The base station according to claim 12, wherein the initialization module performs initialization according to the SLNR scheme in the following way:
   each base station initializing the transmitting beamforming vector $\mathbf{w}_i^{(n-1)}$ which is an eigenvector corresponding to a maximum generalized eigenvalue of $\beta_{ii}\mathbf{H}_{ii}^H\mathbf{H}_{ii}$ and $\dfrac{\sigma^2}{P_i}\mathbf{I}_{N_t} + \sum\limits_{j=1, j\neq i}^{m} \beta_{ji}\mathbf{H}_{ji}^H\mathbf{H}_{ji}$ according to a related SLNR scheme, that is, $\mathbf{w}_i^{(n-1)} = \max\limits_{\|\mathbf{w}_i^{(n-1)}=1\|} \text{gen.eigenvector}\left(\beta_{ii}\mathbf{H}_{ii}^H\mathbf{H}_{ii}, \dfrac{\sigma^2}{P_i}\mathbf{I}_{N_t} + \sum\limits_{j=1, j\neq i}^{m} \beta_{ji}\mathbf{H}_{ji}^H\mathbf{H}_{ji}\right)$, wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an $n$th time slot, $\mathbf{H}_{ji}^{(n)}$ can be expressed by omitting superscript (n) when channels are in a static state, that is, the channel matrix in each time slot is expressed as $\mathbf{H}_{ji}$, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes a transmitting beamforming vector of the base station $i$ in the $n$th time slot, superscript $H$ denotes conjugate transpose, transmitting power of the base station i is $P_i$ and noise power is $\sigma^2$;

the step of each base station in the coordinating set respectively calculating the receiving beamforming vector initiation estimate value comprises:

each base station respectively calculating the receiving beamforming vector initiation estimate value

$\hat{\mathbf{v}}_i^{(n-1)} = \dfrac{\mathbf{H}_{ii}\mathbf{w}_i^{(n-1)}}{\left\|\mathbf{H}_{ii}\mathbf{w}_i^{(n-1)}\right\|}$, wherein $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot; and

the step of each base station in the coordinating set respectively calculating, the interference initiation vector of each base station to other interference terminals except the serving terminal in the coordinating set comprises:

each base station respectively calculating the interference vector initiation value $\sqrt{P_i\beta_{ji}}\mathbf{H}_{ji}\mathbf{w}_i^{(n-1)}$ of each base station to other interference terminals except the serving terminal in the coordinating set.

14. The base station according to claim 12, wherein the initialization module further performs initialization according to the SLNR scheme in the following way:

the step of each base station in the coordinating set initializing the transmitting beamforming vector according to the maximized SLNR scheme comprises: each base station initializing, the transmitting beamforming vector $\mathbf{w}_i^{(n-1)}$ which is an eigenvector corresponding to a maximum generalized eigenvalue of $\beta_{ii}\mathbf{H}_{ii}^{(n-1)H}\mathbf{H}_{ii}^{(n-1)}$ and

$\dfrac{\sigma^2}{P_i}\mathbf{I}_{N_t} + \sum\limits_{j=1, j\neq i}^{m} \beta_{ji}\mathbf{H}_{ji}^{(n-1)H}\mathbf{H}_{ji}^{(n-1)}$ according to a related SLNR scheme, that is,

$\mathbf{w}_i^{(n-1)} = \max\limits_{\|\mathbf{w}_i^{(n-1)}=1\|} \text{gen.eigenvector}\left(\beta_{ii}\mathbf{H}_{ii}^{(n-1)H}\mathbf{H}_{ii}^{(n-1)}, \dfrac{\sigma^2}{P_i}\mathbf{I}_{N_t} + \sum\limits_{j=1, j\neq i}^{m} \beta_{ji}\mathbf{H}_{ji}^{(n-1)H}\mathbf{H}_{ji}^{(n-1)}\right)$,

wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an $n$th time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes a transmitting beamforming vector of the base station $i$ in the $n$th time slot, superscript $H$ denotes conjugate transpose, transmitting power of the base station $i$ is $P_i$ and noise power is $\sigma^2$;

the step of each base station in the coordinating set respectively calculating the receiving beamforming vector initiation estimate value comprises: each base station respectively calculating the receiving beamforming vector initiation estimate value $\hat{\mathbf{v}}_i^{(n-1)} = \dfrac{\mathbf{H}_{ii}^{(n-1)}\mathbf{w}_i^{(n-1)}}{\left\|\mathbf{H}_{ii}^{(n-1)}\mathbf{w}_i^{(n-1)}\right\|}$ , wherein $\mathbf{v}_i^{(n)}$ ($N_r$x1 dimensions, $\left\|\mathbf{v}_i^{(n)}\right\|=1$) denotes the receiving beamforming vector of the terminal $i$ in the nth time slot; and

the step of each base station in the coordinating set respectively calculating the interference initiation vector of each base station to other interference terminals except the serving terminal in the coordinating set comprises that:

each base station respectively calculating the interference vector initiation value of each base station to other interference terminals except the serving terminal in the coordinating set is $\sqrt{P_i\beta_{ji}}\,\mathbf{H}_{ji}^{(n-1)}\mathbf{w}_i^{(n-1)}$ .

15. The base station according to claim 11, wherein the first acquisition module acquires the transmitting beamforming vector in the current time slot according to the receiving beamforming vector estimate value of each interference terminal shared by each base station in the coordinating set in the previous time slot, in the following way:

calculating the transmitting beamforming vector of the present base station in the current time slot according to the following formula: $\mathbf{w}_i^{(n)} = \dfrac{\left(\boldsymbol{\Phi}_i^{(n-1)}\right)^{-1}\mathbf{H}_{ii}^{H}\hat{\mathbf{v}}_i^{(n-1)}}{\left\|\left(\boldsymbol{\Phi}_i^{(n-1)}\right)^{-1}\mathbf{H}_{ii}^{H}\hat{\mathbf{v}}_i^{(n-1)}\right\|}$ , wherein

$$\boldsymbol{\Phi}_i^{(n-1)} = \sum_{j=1,j\neq i}^{m} P_i\beta_{ji}\mathbf{H}_{ji}^{(n-1)H}\hat{\mathbf{v}}_j^{(n-1)}\hat{\mathbf{v}}_j^{(n-1)H}\mathbf{H}_{ji}^{(n-1)}+\sigma^2\mathbf{I}_{N_t} ,$$

wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes a transmitting beamforming vector of the base station $i$ in the nth time slot, $\mathbf{v}_i^{(n)}$ ($N_r$x1 dimensions, $\left\|\mathbf{v}_i^{(n)}\right\|=1$) denotes a receiving beamforming vector of the terminal $i$ in the nth time slot, superscript $H$ denotes conjugate transpose, transmitting power of the base station $i$ is $P_i$, noise power is $\sigma^2$ and $\mathbf{I}_{Nt}$ denotes an $N_t$x$N_t$-dimension unit matrix.

16. The base station according to claim 11, wherein the second acquisition module acquires the receiving beamforming vector estimate value in the current time slot according to the transmitting beamforming vector in the current time slot and the interference vector shared in the previous time slot in the following way:

calculating the receiving beamforming vector estimate value of the serving terminal in the current time slot according to the following formula: $\hat{\mathbf{v}}_i^{(n)} = \dfrac{\left(\boldsymbol{\Psi}_i^{(n-1)}\right)^{-1}\mathbf{H}_{ii}\mathbf{w}_i^{(n)}}{\left\|\left(\boldsymbol{\Psi}_i^{(n-1)}\right)^{-1}\mathbf{H}_{ii}\mathbf{w}_i^{(n)}\right\|}$ , wherein

$$\boldsymbol{\Psi}_i^{(n-1)} = \sum_{j=1,j\neq i}^{m} P_j\beta_{ij}\mathbf{H}_{ij}^{(n-1)}\mathbf{w}_j^{(n-1)}\mathbf{w}_j^{(n-1)H}\mathbf{H}_{ij}^{(n-1)H} + \sigma^2\mathbf{I}_{N_r}$$ , wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r$x$N_t$ dimensions) from a base station $i$ to a terminal $j$ in an nth time slot, $\beta_{ji}$ denotes a path loss from the base station $i$ to the terminal $j$, $\mathbf{w}_i^{(n)}$ ($N_t$x1 dimensions, $\left\|\mathbf{w}_i^{(n)}\right\|=1$) denotes the transmitting beamforming vector of the base station $i$ in the nth time slot, $\mathbf{v}_i^{(n)}$ ($N_r$x1 dimensions, $\left\|\mathbf{v}_i^{(n)}\right\|=1$) denotes the receiving beamforming vector of the terminal $i$ in the $n$th time slot, superscript $H$ denotes conjugate transpose, transmitting power of the base station $i$ is $P_i$, noise power is $\sigma^2$ and $\mathbf{I}_{N_r}$ denotes an $N_r \times N_r$-dimension unit matrix;

and the interference vector $\sqrt{P_i \beta_{ji}} \mathbf{H}_{ji} \mathbf{w}_i^{(n)}$.

**17.** The base station according to claim 11, wherein processing at a receiving end comprises:

each terminal calculating the receiving beamforming vector based on a Minimum Mean Squared Error (MMSE) criterion, that is, $\mathbf{v}_i^{(n)} = \dfrac{\left(\mathbf{\Psi}_i^{(n)}\right)^{-1} \mathbf{H}_{ii} \mathbf{w}_i^{(n)}}{\left\|\left(\mathbf{\Psi}_i^{(n)}\right)^{-1} \mathbf{H}_{ii} \mathbf{w}_i^{(n)}\right\|}$ , wherein $\mathbf{\Psi}_i^{(n)} = \displaystyle\sum_{j=1, j\neq i}^{m} P_j \beta_{ij} \mathbf{H}_{ij}^{(n)} \mathbf{w}_j^{(n)} \mathbf{w}_j^{(n)H} \mathbf{H}_{ij}^{(n)H} + \sigma^2 \mathbf{I}_{N_r}$ ,

wherein m denotes that there are m base stations in the coordinating set, each base station serves one terminal, an $i$th terminal is a serving terminal of an $i$th base station, $\mathbf{H}_{ji}^{(n)}$ denotes a channel matrix ($N_r \times N_t$ dimensions) from a base station i to a terminal j in an nth time slot, $\beta_{ji}$ denotes a path loss from the base station $i$ to the terminal $j$, $\mathbf{w}_i^{(n)}$ ($N_t \times 1$ dimensions, $\left\|\mathbf{w}_i^{(n)}\right\|=1$) denotes the transmitting beamforming vector of the base station $i$ in the nth time slot, $\mathbf{v}_i^{(n)}$ ($N_r \times 1$ dimensions,

$\left\|\mathbf{v}_i^{(n)}\right\|=1$) denotes the receiving beamforming vector of the terminal $i$ in the nth time slot, superscript $H$ denotes conjugate transpose, transmitting power of the base station $i$ is $P_i$, noise power is $\sigma^2$ and $\mathbf{I}_{N_r}$ denotes an $N_r \times N_r$-dimension unit matrix;

each terminal receiving a signal transmitted by a serving base station to which the terminal belongs by using the calculated receiving beamforming vector;

increasing n by one, that *is*, $n \leftarrow n+1$; and repeating processing at a transmitting end and a receiving end until communication is completed.

**18.** The base station according to claim 11 or 12, wherein the base station is in a coordinating set, and the base station and other base stations in the coordinating set are mutually coordinating base stations; and

in the coordinating set, each base station serves one terminal and serves the terminal by adopting a coordinated beamforming mode.

FIG. 1

200
A base station acquires a transmitting beamforming vector in a current time slot according
to a receiving beamforming vector estimate value
of each interference terminal shared in a previous
time slot

201
The base station transmits a signal on
which beamforming has been performed
to a serving terminal of the base station

202
The base station acquires a receiving beamforming
vector estimate value in the current time slot
according to the transmitting beamforming vector
in the current time slot and an interference vector
shared in the previous time slot

203
The base station shares the acquired receiving
beamforming vector estimate value in the current
time slot and an interference vector of the base
station to other terminals with all coordinating
base stations in a coordinating set

FIG. 2

FIG. 3

FIG. 4

FIG. 5

FIG. 6

# INTERNATIONAL SEARCH REPORT

| International application No. |
| --- |
| PCT/CN2014/000582 |

### A. CLASSIFICATION OF SUBJECT MATTER

H04B 7/04 (2006.01) i

According to International Patent Classification (IPC) or to both national classification and IPC

### B. FIELDS SEARCHED

Minimum documentation searched (classification system followed by classification symbols)

H04B 7/-; H04W 88/08

Documentation searched other than minimum documentation to the extent that such documents are included in the fields searched

Electronic data base consulted during the international search (name of data base and, where practicable, search terms used)

CNABS, CNTXT, CNKI: coordinated multi-point, distributed base station, beam forming, receive, vector, matrix, SLNR, MMSE, share, transmit

VEN, DWPI, 3GPP: COMP, cooperat+, base d station, beam d form+, reciev+, vector, matrix, SLNR, MMSE, transmit+, send, share

### C. DOCUMENTS CONSIDERED TO BE RELEVANT

| Category* | Citation of document, with indication, where appropriate, of the relevant passages | Relevant to claim No. |
| --- | --- | --- |
| X | CN 103236878 A (XI'AN JIAOTONG UNIVERSITY), 07 August 2013 (07.08.2013), abstract, description, paragraphs 14, 27 and 38-68, and figures 1-2 | 1-18 |
| X | CN 103236879 A (XI'AN JIAOTONG UNIVERSITY), 07 August 2013 (07.08.2013), abstract, description, paragraphs 26 and 38-66, and figures 1-2 | 1-18 |
| X | CN 103209051 A (XI'AN JIAOTONG UNIVERSITY), 17 July 2013 (17.07.2013), description, paragraphs 6-121 | 1-18 |
| A | US 2011164576 A1 (QUALCOMM INC.), 07 July 2011 (07.07.2011), the whole document | 1-18 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 August 2014 (19.08.2014) | 01 September 2014 (01.09.2014) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer WANG, Chunyan Telephone No.: (86-10) 62801298 |
| --- | --- |

Form PCT/ISA/210 (second sheet) (July 2009)

## INTERNATIONAL SEARCH REPORT
### Information on patent family members

| International application No. |
| --- |
| **PCT/CN2014/000582** |

| Patent Documents referred in the Report | Publication Date | Patent Family | Publication Date |
| --- | --- | --- | --- |
| CN 103236878 A | 07 August 2013 | None | |
| CN 103236879 A | 07 August 2013 | None | |
| CN 103209051 A | 17 July 2013 | None | |
| US 2011164576 A1 | 07 July 2011 | TW 201145873 A | 16 December 2011 |
| | | WO 2011085065 A1 | 14 July 2011 |
| | | US 8432856 B2 | 30 April 2013 |

Form PCT/ISA/210 (patent family annex) (July 2009)